# EUROPEAN PATENT APPLICATION

(11) **EP 4 561 142 A1**
(43) Date of publication of application: **28.05.2025**
(21) Application number: 22956824.1
(22) Date of filing: 30.08.2022
(51) Int. Cl.: H04W 24/02

(54) **MEASUREMENT SIGNAL PROCESSING METHOD AND APPARATUS**

(71) Applicant: Huawei Technologies Co., Ltd., Shenzhen, Guangdong 518129 (CN)
(72) Inventor: GAO, Lei, Shenzhen, Guangdong 518129 (CN); CHENG, Xingqing, Shenzhen, Guangdong 518129 (CN); WANG, Yong, Shenzhen, Guangdong 518129 (CN)
(74) Representative: Huawei European IPR
(86) International application number: PCT/CN2022/115974
(87) International publication number: WO 2024/044992

(57) **Abstract**

A measurement signal processing method and apparatus are provided. The method includes: A first node (110) determines a type of a measurement signal sent and/or received by a second node (120). The first node (110) is a master node, the second node (120) is a slave node, the second node (120) is a measurement node or a measured node, and the measurement is ranging, angle measurement, or positioning performed on the measured node. The first node (110) sends first information to the second node (120). The first information indicates the type of the measurement signal, and the type of the measurement signal includes a single-tone signal or a multi-tone signal. According to the measurement signal processing method and apparatus, the type of the measurement signal sent or received by the node can be determined, and the type of the measurement signal is indicated to the node. Therefore, the node can implement ranging, angle measurement, or positioning.

## Description

### TECHNICAL FIELD

This application relates to the field of communication technologies, and specifically, to a measurement signal processing method and apparatus in ranging, angle measurement, or positioning implemented based on sparklink wireless communication.

### BACKGROUND

As wireless communication technologies continuously develop, a wireless ranging, angle measurement, or positioning function may be implemented in scenarios such as an indoor scenario, a vehicle, or an underground parking lot based on the wireless communication technologies. A scenario in which ranging, angle measurement, or positioning is implemented based on the wireless communication technologies may include one or more measurement nodes and measured nodes. A location at which the measurement node is located is used as a reference location for ranging, angle measurement, or positioning. The measured node is a node whose distance and angle need to be measured or a node needs to be positioned. A measurement signal is sent between the measured node and the measurement node to implement ranging, angle measurement, or positioning. However, during actual application, implementation of specific measurement is limited by a signal receiving/sending capability of the node and/or a performance requirement of measurement. Therefore, how to implement ranging, angle measurement, or positioning in a wider application scope is a technical problem to be resolved by persons skilled in the art.

### SUMMARY

This application provides a measurement signal processing method and apparatus, to determine a type of a measurement signal sent or received by a node, and indicate the type of the measurement signal to the node. Therefore, the node can implement ranging, angle measurement, or positioning.

According to a first aspect, an embodiment of this application provides a measurement signal processing method. The method includes:
A first node determines a type of a measurement signal sent and/or received by a second node. The first node is a master node, the second node is a slave node, the second node is a measurement node or a measured node, and the measurement is ranging, angle measurement, or positioning performed on the measured node.

The first node sends first information to the second node. The first information indicates the type of the measurement signal, and the type of the measurement signal includes a single-tone signal or a multi-tone signal.

In a measurement scenario of wireless ranging, wireless angle measurement, or wireless positioning, a measurement signal used to implement measurement may use a simple measurement signal (for example, a single-tone signal) or a complex measurement signal (for example, a multi-tone signal), to support different measurement performance requirements and different device capabilities. This application provides a solution in which in a measurement process, the measurement node and/or the measured node determines, from a plurality of types of optional measurement signals, the type of the measurement signal specifically communicated by the measurement node and/or the measured node. In other words, the master node for scheduling a resource in a communication system indicates the type of the measurement signal sent and/or received by the measurement node and/or the measured node. This solution may be applied to measurement scenarios in which ranging, angle measurement, or positioning is performed by devices with different measurement performance requirements and different capabilities, so that the measurement node can complete ranging, angle measurement, or positioning on the measured node. This expands an application scope of ranging, angle measurement, or positioning.

In a possible implementation, the first node sends second information to the second node, and the second information indicates one or more of the following:
a quantity N of simultaneously communicated frequency components in the measurement signal, where N is an integer greater than or equal to 1;
a frequency spacing between frequency components in the measurement signal; and
a modulation scheme of the measurement signal.

In this solution, the second node determines, based on the indication, a corresponding parameter of the sent and/or received measurement signal, and further implements a ranging, ranging, or positioning function by sending and/or receiving the measurement signal with the corresponding parameter. It may be understood that the second information and the first information may be same information, or may be information sent in same signaling or a same message. Alternatively, the second information and the first information may be different information, for example, may be information sent in different signaling or messages. When the first information and the second information are the same information, the type of the measurement signal (a single-tone signal or a multi-tone signal) may be determined based on the parameters. In comparison with sending two different pieces of information to separately indicate the type and the parameter of the measurement signal, the type or the parameter of the measurement signal may be determined based on one piece of information, to save signaling communication resources.

In a possible implementation, the first node receives third information from the second node, and the third information indicates a capability of sending and/or receiving the measurement signal of the second node.

In this solution, the first node may more properly determine and configure the type of the measurement signal based on the capability of sending and/or receiving the measurement signal of the second node, so that the measurement signal can match a processing capability of the node. This further implements the ranging, angle measurement, or positioning function.

In a possible implementation, the first node obtains a performance requirement of the measurement, and the performance requirement includes at least one of the following: ranging precision, positioning precision, angle measurement precision, a ranging delay, a positioning delay, an angle measurement delay, a ranging range, or an angle measurement range.

In this solution, the first node may more properly determine and configure the type of the measurement signal based on the performance requirement of the measurement, to meet measurement scenarios with different performance requirements.

It may be understood that, in another possible implementation, the capability of sending and/or receiving the measurement signal of the second node and/or the performance requirement of the measurement may be pre-configured on the first node, and does not need to be additionally obtained.

In a possible implementation, the method further includes: The first node sends fourth information to the second node. The fourth information indicates a first random seed, and the first random seed is used to determine a quantity of times of adding a disturbance signal to the measurement signal and/or a time location of the disturbance signal.

In this solution, after the disturbance signal is added, regularity of the measurement signal can be damaged, to effectively prevent an attacker from forging a result measurement signal to mislead a measurement result. Specifically, disturbance signals are added to random locations, and a quantity of times of adding disturbance signals is also random, to increase randomness of the measurement signal. Therefore, it is difficult for the attacker to forge a measurement signal including disturbance signals. When received measurement signals include the forged signal, an authorized receive end may identify, based on a feature of the disturbance signal, that the measurement signals include the forged signal. For example, the receive end detects presence of the disturbance signal at the location of the disturbance signal, a signal-to-noise ratio of the disturbance signal, or another feature of the disturbance signal, to determine whether the received measurement signals include the forged signal. However, it is difficult for the attacker to determine the quantity of times of adding the disturbance signal and the time location of the disturbance signal. Therefore, it is difficult for the attacker to send the disturbance signal at the time location of the disturbance signal, to effectively prevent the signal from being forged.

In a possible implementation, the disturbance signal is a phase-inverted signal of an original signal.

The phase-inverted signal is a signal that has same amplitude as and an opposite phase to the original signal. The disturbance signal and the original signal have same amplitude, to avoid a sudden change in energy of the measurement signal, and ensure that a signal communicated on each time unit in a communication resource can have a sufficient signal-to-noise ratio. A phase of the disturbance signal is opposite to that of the original signal, to suppress, when energy of a time unit on which a communicated signal is replaced is leaked to another time unit, impact (only the amplitude is affected, and the phase is not affected) of the energy on a phase of a signal communicated on the another time unit. This ensures performance of measuring channel phase information.

In a possible implementation, the method further includes: The first node sends fifth information to the second node. The fifth information indicates a second random seed, and the second random seed is used to determine an initial phase of a frequency component of the measurement signal.

In this solution, the random seed may be configured by the master node, to randomly determine an initial phase of the measurement signal. The random seed may be randomly specified by the master node, and the initial phase of the measurement signal communicated in the measurement process is also randomly determined based on the random seed. Therefore, eavesdropping of the measurement signal can be prevented. Even if the measurement signal is eavesdropped, it is difficult for an eavesdropper to know the real initial phase of the measured signal, and infer the channel phase information. Consequently, it is difficult to obtain a location of the measured node. This implements secure measurement. In other words, this method makes it more difficult for the attacker to obtain location information of the node through eavesdropping, to improve security.

In a possible implementation, when the measurement signal is a multi-tone signal,
the second random seed is used to generate an initial phase of each frequency component of the measurement signal; or
the second random seed is used to generate a time offset, and an initial phase of each frequency component of the measurement signal is determined based on the time offset and a preset phase combination.

In this solution, the initial phase of each frequency component of the measurement signal may be randomly generated, to further enhance randomness of the phase of the measurement signal, reduce a risk of eavesdropping, and implement secure measurement.

In the foregoing solution of determining the initial phase based on the time offset and the preset phase combination, an optimized preset phase combination may be used, so that a peak-to-average power ratio (peak-to-average power ratio, PAPR) of the multi-tone signal may be lower than that in a case in which the preset phase combination is not optimized. This obtains better measurement performance. In addition, the time offset is randomly generated, so that the initial phase of each frequency component cannot be predicted by the attacker, and it is more difficult for the attacker to obtain the location information of the node through eavesdropping. This improves security.

In a possible implementation, the first node sends sixth information to the second node. The sixth information indicates whether to add the disturbance signal to the measurement signal, and/or indicates whether to randomize the initial phase of the measurement signal.

Because the quantity of times of adding the disturbance signal to the measurement signal and the time location of the disturbance signal need to be calculated, a large quantity of computing resources are consumed. In this solution, the master node determines, in a manner of sending information for indication, whether to add the disturbance signal to the measurement information, to save computing resources of the node in a scenario in which disturbing is not required.

According to a second aspect, an embodiment of this application provides a measurement signal processing method. The method includes:

A second node receives first information from a first node. The first information indicates a type of a measurement signal sent and/or received by the second node, the type of the measurement signal includes a single-tone signal or a multi-tone signal, the first node is a master node, the second node is a slave node, the second node is a measurement node or a measured node, and the measurement is ranging, angle measurement, or positioning performed on the measured node.

The second node sends or receives a first measurement signal. The first measurement signal is used for the measurement.

In a measurement scenario of wireless ranging, wireless angle measurement, or wireless positioning, a measurement signal used to implement measurement may use a simple measurement signal (for example, a single-tone signal) or a complex measurement signal (for example, a multi-tone signal), to support different measurement performance requirements and different device capabilities. This application provides a solution in which in a measurement process, the measurement node and/or the measured node determines, from a plurality of types of optional measurement signals, the type of the measurement signal specifically communicated by the measurement node and/or the measured node. In other words, the master node for scheduling a resource in a communication system indicates the type of the measurement signal sent and/or received by the measurement node and/or the measured node. This solution may be applied to measurement scenarios in which ranging, angle measurement, or positioning is performed by devices with different measurement performance requirements and different capabilities, so that the measurement node can complete ranging, angle measurement, or positioning on the measured node. This expands an application scope of ranging, angle measurement, or positioning.

In a possible implementation, the second node receives second information from the first node, to indicate one or more of the following:
a quantity N of simultaneously communicated frequency components in the measurement signal, where N is an integer greater than or equal to 1;
a frequency spacing between frequency components in the measurement signal; and
a modulation scheme of the measurement signal.

In this solution, the second node determines, based on the indication, a corresponding parameter of the sent and/or received measurement signal, and further implements a ranging, ranging, or positioning function by sending and/or receiving the measurement signal with the corresponding parameter. When the first information and the second information are the same information, the type of the measurement signal (a single-tone signal or a multi-tone signal) may be determined based on the parameters. In comparison with sending two different pieces of information to separately indicate the type and the parameter of the measurement signal, the type or the parameter of the measurement signal may be determined based on one piece of information, to save signaling communication resources.

In a possible implementation, the method further includes: The second node sends third information to the first node. The third information indicates a capability of sending and/or receiving the measurement signal of the second node.

In this solution, the first node may more properly determine and configure the type of the measurement signal based on the capability of sending and/or receiving the measurement signal of the second node, so that the measurement signal can match a processing capability of the node. This further implements the ranging, angle measurement, or positioning function.

In a possible implementation, the method further includes:
The second node sends, to the first node, information indicating a performance requirement. The performance requirement includes at least one of the following: ranging precision, positioning precision, angle measurement precision, a ranging delay, a positioning delay, an angle measurement delay, a ranging range, or an angle measurement range.

In this solution, the first node may more properly determine and configure the type of the measurement signal based on the performance requirement of the measurement, to meet measurement scenarios with different performance requirements.

In a possible implementation, the method further includes: The second node receives fourth information from the first node. The fourth information indicates a first random seed, and the first random seed is used to determine a quantity of times of adding a disturbance signal to the first measurement signal and/or a time location of the disturbance signal.

In this solution, after the disturbance signal is added, regularity of the measurement signal can be damaged, to effectively prevent an attacker from forging a result measurement signal to mislead a measurement result. Specifically, disturbance signals are added to random locations, and a quantity of times of adding disturbance signals is also random, to increase randomness of the measurement signal. Therefore, it is difficult for the attacker to forge a measurement signal including disturbance signals. When received measurement signals include the forged signal, an authorized receive end may identify, based on a feature of the disturbance signal, that the measurement signals include the forged signal. For example, the receive end detects presence of the disturbance signal at the location of the disturbance signal, a signal-to-noise ratio of the disturbance signal, or another feature of the disturbance signal, to determine whether the received measurement signals include the forged signal. However, it is difficult for the attacker to determine the quantity of times of adding the disturbance signal and the time location of the disturbance signal. Therefore, it is difficult for the attacker to send the disturbance signal at the time location of the disturbance signal, to effectively prevent the signal from being forged.

In a possible implementation, the disturbance signal is a phase-inverted signal of an original signal.

The phase-inverted signal is a signal that has same amplitude as and an opposite phase to the original signal. The disturbance signal and the original signal have same amplitude, to avoid a sudden change in energy of the measurement signal, and ensure that a signal communicated on each time unit in a communication resource can have a sufficient signal-to-noise ratio. A phase of the disturbance signal is opposite to that of the original signal, to suppress, when energy of a time unit on which a communicated signal is replaced is leaked to another time unit, impact (only the amplitude is affected, and the phase is not affected) of the energy on a phase of a signal communicated on the another time unit. This ensures performance of measuring channel phase information.

In a possible implementation, the first measurement signal is communicated on a first time resource, the first time resource includes at least M time units, and M is an integer greater than 1.

Whether the disturbance signal is communicated on an i^{th} time unit in the M time units is determined based on the first random seed and a time domain resource corresponding to the i^{th} time unit, and i is any integer from 1 to M.

In this solution, whether disturbing is performed on the time unit (that is, communicating the disturbance signal on the time unit) is determined based on the random seed and the time domain resource corresponding to the time unit in the time resource for communicating the measurement signal, to increase randomness of a result of whether disturbing is performed, and reduce a risk of eavesdropping on or forging the measurement signal.

In a possible implementation, the first measurement signal is communicated on a first time resource, the first time resource includes at least M time units, and M is an integer greater than 1.

The quantity of times of adding the disturbance signal to the first measurement signal is L, L is an integer greater than 0 and less than M, and L is determined based on the first random seed and the first time resource.

A time location, in the first measurement signal, of a j^{th} disturbance signal in the L disturbance signals is determined based on the first random seed, the first time resource, and j, and j is an integer greater than 0 and less than or equal to L.

In this solution, the quantity of times of adding the disturbance signal is randomly calculated, and then a location at which the disturbance signal is added each time is randomly calculated, to increase randomness of whether disturbing is performed, and reduce the risk of eavesdropping on or forging the measurement signal.

In a possible implementation, a length of the time unit is determined based on at least one of the following:
a length of one or more symbols in the time resource;
a hopping frequency spacing; and
a frequency spacing between a plurality of frequency components.

In this solution, the length of the time unit is flexible, and there are few limitations on specific implementation. The length of the time unit may be determined based on an actual application requirement, to increase application flexibility.

In a possible implementation, the method includes: The first node receives fifth information. The fifth information indicates a second random seed, and the second random seed is used to determine an initial phase of a frequency component of the first measurement signal.

In this solution, the random seed may be configured by the master node, to randomly determine an initial phase of the measurement signal. The random seed may be randomly specified by the master node, and the initial phase of the measurement signal communicated in the measurement process is also randomly determined based on the random seed. Therefore, eavesdropping of the measurement signal can be prevented. Even if the measurement signal is eavesdropped, it is difficult for an eavesdropper to know the real initial phase of the measured signal, and infer the channel phase information. Consequently, it is difficult to obtain a location of the measured node. This implements secure measurement. In other words, this method makes it more difficult for the attacker to obtain location information of the node through eavesdropping, to improve security.

In a possible implementation, when the first measurement signal is a multi-tone signal,
the second random seed is used to generate an initial phase of each frequency component of the first measurement signal; or
the second random seed is used to generate a time offset, and an initial phase of each frequency component of the first measurement signal is determined based on the time offset and a preset phase combination.

In this solution, the initial phase of each frequency component of the measurement signal may be randomly generated, to further enhance randomness of the phase of the measurement signal, reduce a risk of eavesdropping, and implement secure measurement.

In the foregoing solution of determining the initial phase based on the time offset and the preset phase combination, an optimized preset phase combination may be used, so that a peak-to-average power ratio (peak-to-average power ratio, PAPR) of the multi-tone signal may be lower than that in a case in which the preset phase combination is not optimized. This obtains better measurement performance. In addition, the time offset is randomly generated, so that the initial phase of each frequency component cannot be predicted by the attacker, and it is more difficult for the attacker to obtain the location information of the node through eavesdropping. This improves security.

In a possible implementation, the second node receives sixth information from the first node. The sixth information indicates whether to add the disturbance signal to the first measurement signal, and/or indicates whether to randomize the initial phase of the first measurement signal.

Because the quantity of times of adding the disturbance signal to the measurement signal and the time location of the disturbance signal need to be calculated, a large quantity of computing resources are consumed. In this solution, the master node determines, in a manner of sending information for indication, whether to add the disturbance signal to the measurement information, to save computing resources of the node in a scenario in which disturbing is not required.

According to a third aspect, this application provides a measurement signal processing apparatus. The apparatus includes:
a determining unit, configured to determine a type of a measurement signal sent and/or received by a second node, where the apparatus is a master node, the second node is a slave node, the second node is a measurement node or a measured node, and the measurement is ranging, angle measurement, or positioning performed on the measured node; and
a sending unit, configured to send first information to the second node, where the first information indicates the type of the measurement signal, and the type of the measurement signal includes a single-tone signal or a multi-tone signal.

In a possible implementation, the sending unit is further configured to send second information to the second node, and the second information indicates one or more of the following:
a quantity N of simultaneously communicated frequency components in the measurement signal, where N is an integer greater than or equal to 1;
a frequency spacing between frequency components in the measurement signal; and
a modulation scheme of the measurement signal.

In a possible implementation, the apparatus further includes a receiving unit, configured to receive third information from the second node, the third information indicates a capability of sending and/or receiving the measurement signal of the second node, and the capability is used to determine the type of the measurement signal.

In a possible implementation, the apparatus further includes an obtaining unit, configured to obtain a performance requirement of the measurement, and the performance requirement includes at least one of the following: ranging precision, positioning precision, angle measurement precision, a ranging delay, a positioning delay, an angle measurement delay, a ranging range, or an angle measurement range.

In a possible implementation, the sending unit is further configured to:
send fourth information to the second node, where the fourth information indicates a first random seed, and the first random seed is used to determine a quantity of times of adding a disturbance signal to the measurement signal and/or a time location of the disturbance signal.

In a possible implementation, the disturbance signal is a phase-inverted signal of an original signal.

In a possible implementation, the sending unit is further configured to:
send fifth information to the second node, where the fifth information indicates a second random seed, and the second random seed is used to determine an initial phase of a frequency component of the measurement signal.

In a possible implementation, when the measurement signal is a multi-tone signal,
the second random seed is used to generate an initial phase of each frequency component of the measurement signal; or
the second random seed is used to generate a time offset, and an initial phase of each frequency component of the measurement signal is determined based on the time offset and a preset phase combination.

In a possible implementation, the sending unit is further configured to:
send sixth information to the second node, where the sixth information indicates whether to add the disturbance signal to the measurement signal, and/or indicates whether to randomize the initial phase of the measurement signal.

According to a fourth aspect, this application provides a measurement signal processing apparatus. The apparatus includes:
a receiving unit, configured to receive first information from a first node, where the first information indicates a type of a measurement signal sent and/or received by the apparatus, the type of the measurement signal includes a single-tone signal or a multi-tone signal, the first node is a master node, the apparatus is a slave node, the apparatus is a measurement node or a measured node, and the measurement is ranging, angle measurement, or positioning performed on the measured node; and
a communication unit, configured to send or receive a first measurement signal, where the first measurement signal is used for the measurement.

In a possible implementation, that the first information indicates a type of a measurement signal sent and/or received by the apparatus includes that the first information indicates one or more of the following:
a quantity N of simultaneously communicated frequency components in the measurement signal, where N is an integer greater than or equal to 1;
a frequency spacing between frequency components in the measurement signal; and
a modulation scheme of the measurement signal.

In a possible implementation, the apparatus further includes a sending unit, configured to send third information to the first node, and the third information indicates a capability of sending and/or receiving the measurement signal of the apparatus.

In a possible implementation, the apparatus further includes the sending unit, configured to send, to the first node, information indicating a performance requirement, the information indicating the performance requirement indicates the performance requirement of the measurement, and the performance requirement includes at least one of the following: ranging precision, positioning precision, angle measurement precision, a ranging delay, a positioning delay, an angle measurement delay, a ranging range, or an angle measurement range.

In a possible implementation, the receiving unit is further configured to:
receive fourth information from the first node, where the fourth information indicates a first random seed, and the first random seed is used to determine a quantity of times of adding a disturbance signal to the first measurement signal and/or a time location of the disturbance signal.

In a possible implementation, the disturbance signal is a phase-inverted signal of an original signal.

In a possible implementation, the first measurement signal is communicated on a first time resource, the first time resource includes at least M time units, and M is an integer greater than 1.

Whether the disturbance signal is communicated on an i^{th} time unit in the M time units is determined based on the first random seed, the first time resource, and i, and i is any integer from 1 to M.

In a possible implementation, the first measurement signal is communicated on a first time resource, the first time resource includes at least M time units, and M is an integer greater than 1.

The quantity of times of adding the disturbance signal to the first measurement signal is L, L is an integer greater than 0 and less than M, and L is determined based on the first random seed and the first time resource.

A time location, in the first measurement signal, of a j^{th} disturbance signal in the L disturbance signals is determined based on the first random seed, the first time resource, and j, and j is an integer greater than 0 and less than or equal to L.

In a possible implementation, a length of the time unit is determined based on at least one of the following:
a length of one or more symbols in the time resource;
a hopping frequency spacing; and
a frequency spacing between a plurality of frequency components.

In a possible implementation, the receiving unit is further configured to:
receive fifth information, where the fifth information indicates a second random seed, and the second random seed is used to determine an initial phase of a frequency component of the first measurement signal.

In a possible implementation, when the first measurement signal is a multi-tone signal,
the second random seed is used to generate an initial phase of each frequency component of the first measurement signal; or
the second random seed is used to generate a time offset, and an initial phase of each frequency component of the first measurement signal is determined based on the time offset and a preset phase combination.

In a possible implementation, the receiving unit is further configured to:
receive sixth information from the first node, where the sixth information indicates whether to add the disturbance signal to the first measurement signal, and/or indicates whether to randomize the initial phase of the first measurement signal.

According to a fifth aspect, this application provides a communication system. The communication system includes a first node and a second node, the first node is the measurement signal processing apparatus in any implementation of the third aspect, and the second node is the measurement signal processing apparatus in any implementation of the fourth aspect.

According to a sixth aspect, this application provides a measurement signal processing apparatus. The measurement signal processing apparatus includes a processor and a storage. The storage is coupled to the processor. When executing a computer program or computer instructions stored in the storage, the processor may implement the method in any implementation of the first aspect. The measurement signal processing apparatus may further include a communication interface. The communication interface is used for communication between the measurement signal processing apparatus and another apparatus. For example, the communication interface may be a transceiver, a circuit, a bus, a module, or a communication interface of another type.

In a possible implementation, the device may include:
the storage, configured to store the computer program or the computer instructions; and
the processor, configured to:
   determine a type of a measurement signal sent and/or received by a second node, where the first node is a master node, the second node is a slave node, the second node is a measurement node or a measured node, and the measurement is ranging, angle measurement, or positioning performed on the measured node; and
   send first information to the second node through the communication interface, where the first information indicates the type of the measurement signal, and the type of the measurement signal includes a single-tone signal or a multi-tone signal.

It should be noted that, in this application, the computer program or the computer instructions in the storage may be pre-stored, or may be downloaded from the Internet and stored when the apparatus is used. A source of the computer program or the computer instructions in the storage is not specifically limited in this application. Coupling in embodiments of this application is indirect coupling or connection between apparatuses, units, or modules, and may be in an electrical, mechanical, or another form, and is used for information exchange between the apparatuses, units, or modules.

According to a seventh aspect, this application provides a measurement signal processing apparatus. The measurement signal processing apparatus includes a processor and a storage. The storage is coupled to the processor. When executing a computer program or computer instructions stored in the storage, the processor may implement the method in any implementation of the second aspect. The measurement signal processing apparatus may further include a communication interface. The communication interface is used for communication between the measurement signal processing apparatus and another apparatus. For example, the communication interface may be a transceiver, a circuit, a bus, a module, or a communication interface of another type.

In a possible implementation, the device may include:
the storage, configured to store the computer program or the computer instructions; and
the processor, configured to:
   receive first information from a first node through the communication interface, where the first information indicates a type of a measurement signal sent and/or received by the second node, the type of the measurement signal includes a single-tone signal or a multi-tone signal, the first node is a master node, the second node is a slave node, the second node is a measurement node or a measured node, and the measurement is ranging, angle measurement, or positioning performed on the measured node; and
   send or receive a first measurement signal through the communication interface, where the first measurement signal is used for the measurement.

It should be noted that, in this application, the computer program or the computer instructions in the storage may be pre-stored, or may be downloaded from the Internet and stored when the device is used. A source of the computer program or the computer instructions in the storage is not specifically limited in this application. Coupling in embodiments of this application is indirect coupling or connection between apparatuses, units, or modules, and may be in an electrical, mechanical, or another form, and is used for information exchange between the apparatuses, units, or modules.

According to an eighth aspect, this application provides a computer-readable storage medium. The computer-readable storage medium stores a computer program or computer instructions, and when the computer program or the computer instructions are executed by the processor, the method in any implementation of the first aspect is implemented.

According to a ninth aspect, this application provides a computer-readable storage medium. The computer-readable storage medium stores a computer program or computer instructions, and when the computer program or the computer instructions are executed by the processor, the method in any implementation of the second aspect is implemented.

According to a tenth aspect, this application provides a computer program product. When the computer program product is executed by a processor, the method in any implementation of the first aspect is performed.

According to an eleventh aspect, this application provides a computer program product. When the computer program product is executed by a processor, the method in any implementation of the second aspect is performed.

According to a twelfth aspect, an embodiment of this application provides a chip. The chip includes a processor, and the processor is configured to execute a computer program or computer instructions stored in a storage, so that the chip performs the method in any implementation of the first aspect.

According to a thirteenth aspect, an embodiment of this application provides a chip. The chip includes a processor, and the processor is configured to execute a computer program or computer instructions stored in a storage, so that the chip performs the method in any implementation of the second aspect.

The solutions provided in the third aspect to the thirteenth aspect are used to implement or cooperate with the method correspondingly provided in the first aspect or the second aspect, to achieve same or corresponding beneficial effect as the corresponding method in the first aspect or the second aspect. Details are not described herein again.

### BRIEF DESCRIPTION OF DRAWINGS

The following describes accompanying drawings used in embodiments of this application.
FIG. 1 and FIG. 2 are diagrams of structures of communication systems;
FIG. 3 is a schematic flowchart of a measurement signal processing method;
FIG. 4 is a diagram of a spectrum of a measurement signal;
FIG. 5A to FIG. 5D are composition diagrams of time resources; and
FIG. 6 to FIG. 9 are diagrams of structures of apparatuses.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following: Only A exists, only B exists, or both A and B exist. A description manner like "at least one (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

The following first describes technical terms in embodiments of this application.

A measurement anchor (also referred to as a measurement node) is a node, in nodes participating in ranging, angle measurement, or positioning, whose location is used as a reference location for ranging, angle measurement, or positioning. For ease of description, the ranging, the angle measurement, or the positioning may be collectively referred to as measurement subsequently.

A measurement label (which is also referred to as a measured node) is a measured node in the nodes participating in ranging, angle measurement, or positioning. A distance, an angle, or a location of a positioning label relative to the reference location is determined through ranging, angle measurement, or positioning.

A master node is a node that configures a resource and a parameter for communicating signals (including a measurement signal), signaling (including signaling related to ranging, angle measurement, or positioning), and service information (including service information related to ranging, angle measurement, or positioning) between nodes. The master node may be an independent entity, or may be a measurement label or a measurement anchor. The master node may also be referred to as an M node (master node), a C node (central node), or a G node (grand node).

A slave node is a node that receives a configuration of the master node and communicates (including sending and/or receiving) a signal (including a measurement signal), signaling (including signaling related to ranging, angle measurement, or positioning), and service information (including service information related to ranging, angle measurement, or positioning) with another node based on the configuration of the master node. The slave node may also be referred to as an S node (slave node), a P node (peripheral node), or a T node (terminal node).

A random seed is an input parameter of a pseudo-random function. The pseudo-random function is used to pseudo-randomly generate a parameter.

The following describes embodiments of this application by using examples with reference to the accompanying drawings.

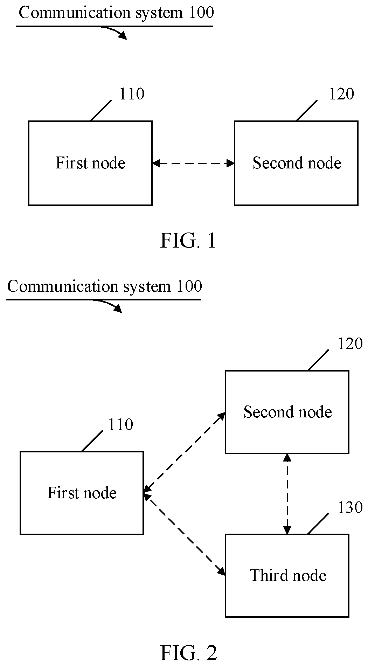

FIG. 1 shows an example of a communication system 100. The communication system 100 includes a first node 110 and a second node 120. Wireless communication may be performed between the first node 110 and the second node 120. For example, communication may be implemented via a sparklink (Spark Link) technology, a long term evolution (long term evolution, LTE) technology, a 5th generation mobile communication technology (5th Generation Mobile Communication Technology, 5G), a wireless local area network (for example, Wi-Fi) technology, Bluetooth (Bluetooth, BT), and Zigbee (Zigbee), or a vehicle-mounted short-range wireless communication technology.

The first node 110 may be a master node in the communication system 100. The second node 120 may be a slave node in the communication system 100. The master node may be configured to configure communication resources used by nodes (including the master node and the slave node) in the communication system 100 to send and/or receive information. The communication resources are, for example, a time domain resource and/or a frequency domain resource. The master node may further be configured to configure a parameter of a signal sent and/or received by the node in the communication system 100. The signal may be, for example, a measurement signal used for the measurement. The parameter may include, for example, a signal type, a modulation scheme, or a random seed used for disturbing. The slave node may be configured to receive a configuration of the master node, and then send and/or receive a signal based on the configured communication resource. That the master node configures the communication resource and/or a parameter of the slave node may be that the master node determines the corresponding communication resource and/or parameter, and then indicates the communication resource and/or the parameter by sending information to the slave node. The sent information may be carried in signaling or a message (message).

The node in the communication system 100 may be configured to implement the measurement function based on the communication resource and a parameter of a measurement signal that are configured by the master node.

In a possible implementation, in the foregoing measurement application scenario, the first node 110 may be a measurement node, that is, the master node is the measurement node. The second node 120 may be a measured node. A location at which the measurement node is located is used as a reference location for the measurement. The measured node is a node whose distance needs to be measured or a node needs to be positioned. The first node 110 is a master node. Therefore, after the first node 110 configures communication resources and the parameter of the measurement signal for the first node 110 and the second node 120, the first node 110 and the second node 120 may send the measurement signal to measure the measured node, that is, the second node 120.

For example, in the foregoing process in which the first node 110 and the second node 120 send the measurement signal to measure the second node 120, the first node 110 may send measurement signals to the second node 120 for one or more times. Alternatively, the second node 120 may send measurement signals to the first node 110 for one or more times. Alternatively, the first node 110 may send measurement signals to the second node 120 for one or more times, and the second node 120 may also send measurement signals to the first node 110 for one or more times. In other words, measurement signals may be communicated between the measurement node and the measured node for one or more times, to measure the measured node. A specific measurement implementation process is not limited in embodiment of this application.

In another possible implementation, in the foregoing measurement application scenario, the first node 110 may be a measured node, that is, the master node is the measured node. The second node 120 may be a measurement node. Similarly, the first node 110 is a master node. Therefore, after the first node 110 configures communication resources and the parameter of the measurement signal for the first node 110 and the second node 120, the first node 110 and the second node 120 may send the measurement signal to measure the measured node, that is, the first node 110. For descriptions of the measurement, refer to the foregoing descriptions. Details are not described herein.

In another possible implementation, in the foregoing measurement application scenario, the first node 110 is neither a measurement node nor a measured node, and is mainly configured to configure communication resources and a parameter of a measurement signal for the measurement node and the measured node. In other words, the master node is a node independent of the measurement node and the measured node. For ease of understanding, for example, refer to FIG. 2. It can be seen that the communication system 100 may further include a third node 130. The third node 130 is a slave node in the communication system 100. Wireless communication may be performed between any two of the first node 110, the second node 120, and the third node 130. The master node, namely, the first node 110, also configures a communication resource used by the third node 130 to send and/or receive information and a parameter of a measurement signal sent and/or received by the third node 130.

The second node 120 may be a measurement node, and the third node 130 may be a measured node. After the first node 110 configures communication resources and the parameter of the measurement signal for the second node 120 and the third node 130, the second node 120 and the third node 130 may send the measurement signal to measure the measured node, that is, the third node 130. For descriptions of the measurement, refer to the foregoing descriptions. Details are not described herein.

It may be understood that the measurement node may be configured to measure one or more measured nodes. One or more measurement nodes and the measured node may exchange measurement signals, to locate the measured node. The plurality of measurement nodes are configured to locate the measured node, to improve positioning accuracy.

For example, the master node in the communication system 100 may be pre-configured. Alternatively, the master node may be determined by a plurality of nodes in the communication system 100 in an election manner. After the master node is determined in the communication system 100, another node is a slave node. This is merely an example, and does not constitute a limitation on embodiments of this application. A manner of determining a master node is not limited in embodiments of this application.

In a possible implementation, the measurement node may also be referred to as a measurement anchor or a measurement base station. For example, in a ranging application scenario, the measurement node may be referred to as a ranging anchor or a ranging base station. For example, in a positioning application scenario, the measurement node may be referred to as a positioning anchor or a positioning base station.

In a possible implementation, the measured node may also be referred to as a measurement label. For example, in a ranging application scenario, the measured node may be referred to as a ranging label. For example, in a positioning application scenario, the measured node may be referred to as a positioning label.

For example, the master node and the slave node may be apparatuses or devices with a wireless communication function, for example, may be any possible user terminal device, a network device, a base station, a user station, a mobile station, a mobile console, a transportation device, a smart manufacturing device, or a smart home device.

For example, the user terminal device may include but is not limited to any electronic product based on an intelligent operating system, and may perform human-computer interaction with a user by using an input device like a keyboard, a virtual keyboard, a touchpad, a touchscreen, or a sound control device. The electronic product may be, for example, a smartphone, a tablet computer (tablet personal computer, Tablet PC), a handheld computer, a wearable electronic device, a personal computer (personal computer, PC), and a desktop computer. The intelligent operating system includes but is not limited to any operating system that enriches functions of a device by providing various applications for the device, for example, an operating system like Android Android, iOS, Windows, MAC, or HarmonyOS (HarmonyOS).

For example, the network device may include but is not limited to a switch, a router, a bridge, a hub, a gateway, a server, a network interface card, a wireless access point, a modem, an optical transceiver, an optical fiber transceiver, or the like.

For example, the transportation device may include but is not limited to a vehicle or a ship.

For example, the smart manufacturing device may include but is not limited to an automatic production device like a smart instrument or meter, a numerical control machine tool, a control cabinet, or a communication device.

For example, the smart home device may include but is not limited to a smart sound box, an air conditioner, a washing machine, or a television.

For example, the master node and the slave node may alternatively be vehicle-mounted devices, for example, may be a car cockpit (cockpit domain) device, or a module in a car cockpit device, or may be one or more of modules such as a cockpit domain controller (cockpit domain controller, CDC), a camera, a screen, a microphone, a speaker, an electronic key, and a passive entry passive start system controller.

In a possible implementation, the communication system 100 may be applied to a plurality of application scenarios. For example, the communication system 100 may be applied to the following application scenarios: mobile Internet (mobile Internet, MI), industrial control (industrial control), self driving (self driving), transportation safety (transportation safety), Internet of things (Internet of things, IoT), a smart city (smart city), or a smart home (smart home).

It may be understood that the communication systems 100 shown in FIG. 1 and FIG. 2 are merely examples. In a possible implementation, the communication system 100 may include more slave nodes, and is not limited to a quantity of slave nodes shown in FIG. 1 or FIG. 2. A quantity of slave nodes included in the communication system 100 is not limited in embodiments of this application.

Based on the foregoing descriptions, the measurement node and the measured node need to send a measurement signal, to measure the measured node. However, during actual application, capabilities of receiving/sending a signal of nodes are different, which limits implementation of measurement, limits measurement performance, or the like. Therefore, embodiments of this application provide a measurement signal processing method and apparatus, to implement node measurement in a wider application scope.

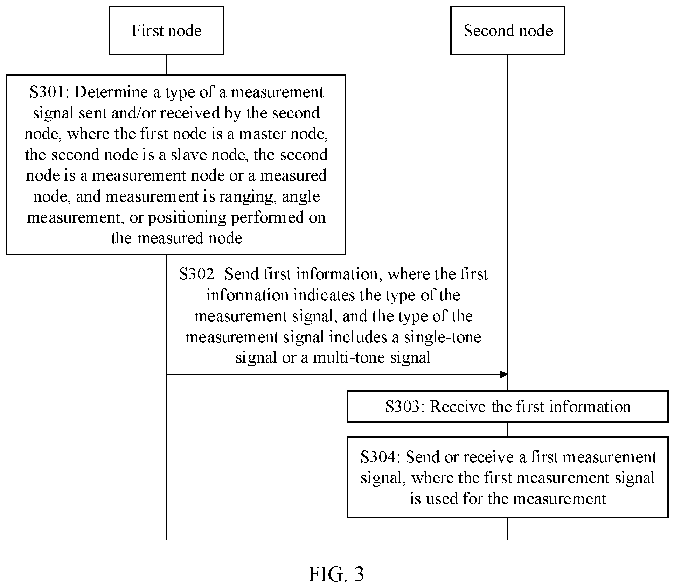

FIG. 3 is a schematic flowchart of an example of a measurement signal processing method according to an embodiment of this application. The measurement signal processing method may include but is not limited to the following steps:
S301: A first node determines a type of a measurement signal sent and/or received by a second node, where the first node is a master node, the second node is a slave node, the second node is a measurement node or a measured node, and the measurement is ranging, angle measurement, or positioning performed on the measured node.

For example, the first node may be the first node 110 shown in FIG. 1 or FIG. 2. For example, the second node 120 may be the second node 120 shown in FIG. 1 or FIG. 2.

In embodiments of this application, the type of the measurement signal may include a single-tone signal and a multi-tone signal.

The single-tone signal is a signal including only a single frequency component, for example, a sine wave signal at a single frequency. The single-tone signal may be a carrier signal that is not modulated, or a binary phase shift keying (binary phase shift keying, BPSK) modulated signal whose phase is not rotated. The carrier signal that is not modulated is mainly used as a measurement signal exchanged between nodes that support only Gaussian frequency shift keying (Gaussian frequency shift keying, GFSK) modulation. The BPSK modulated signal whose phase is not rotated is a signal in which a same value is mapped to a plurality of continuous different symbols. The BPSK modulated signal whose phase is not rotated may be used as a measurement signal exchanged between nodes that support phase shift keying (phase shift keying, PSK)-type modulation. The PSK-type modulation may include BPSK modulation or multi-phase shift keying modulation.

The multi-tone signal is a signal that includes a plurality of (two or more) frequency components that are simultaneously communicated. Optionally, the more than two frequency components may be frequency components distributed at equal frequency spacings. For example, signal of each of the plurality of frequency components is a sine wave signal at a single frequency. A quantity of frequency components in the multi-tone signal is a quantity of tones of the multi-tone signal. For example, when a multi-tone signal includes eight frequency components, a quantity of tones of the multi-tone signal is eight.

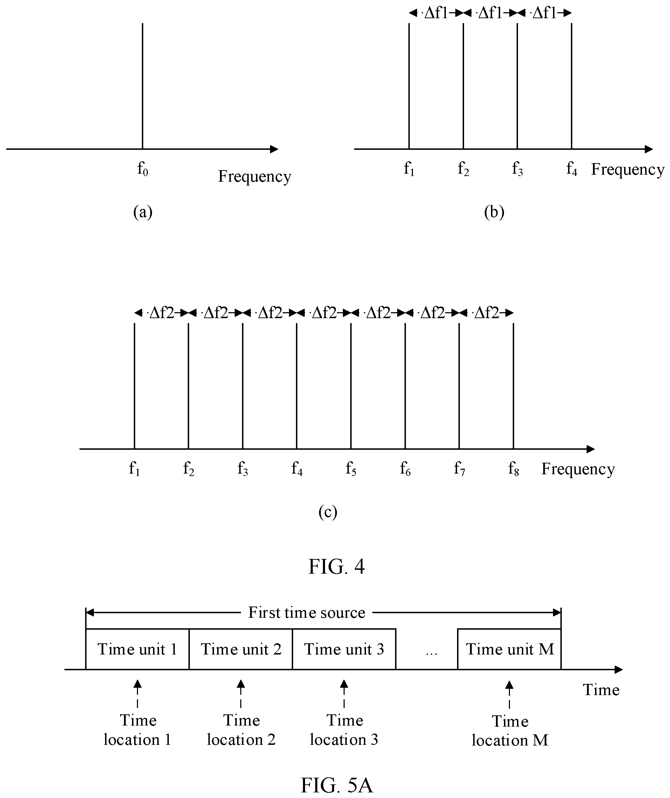

For example, for ease of understanding the single-tone signal and the multi-tone signal, refer to FIG. 4. (a) in FIG. 4 is a diagram of an example of a spectrum of a single-tone signal. It can be seen that the single-tone signal has only one frequency component, and a center frequency of the frequency component is f₀. (b) and (c) in FIG. 4 are diagrams of examples of spectra of multi-tone signals. (b) in FIG. 4 is a diagram of an example of a spectrum of a multi-tone signal including four frequency components. Center frequencies of the four frequency components are: f₁, f₂, f₃, and f₄. In addition, it can be seen that frequency spacings between adjacent frequencies in the four frequencies are equal, and are all Δf1. (c) in FIG. 4 is a diagram of an example of a spectrum of a multi-tone signal including eight frequency components. Center frequencies of the eight frequency components are: f₁, f₂, f₃, f₄, f₅, f₆, f₇, and f₈. In addition, it can be seen that frequency spacings between adjacent frequencies in the eight frequencies are equal, and are all Δf2. It may be understood that FIG. 4 is merely an example, and does not constitute a limitation on embodiments of this application.

For example, during specific implementation, the first node may determine, based on a capability of the second node to receive and/or send the measurement signal, the type of the measurement signal sent and/or received by the second node. For ease of subsequent description, sending and/or receiving is referred to as processing for short in embodiments of this application.

In a possible implementation, the capability may be reported by the second node or another node to the first node. In this embodiment of this application, an example in which the capability is reported by the second node is used. For example, the second node may send, to the first node, information indicating the capability. For ease of subsequent description, the information indicating the capability is referred to as second information. After receiving the second information, the first node may determine, based on the capability indicated by the second information, the type of the measurement signal processed by the second node.

For example, the second information may directly indicate the type of the measurement signal that can be processed by the second node. For example, the type of the measurement signal that can be processed by the second node may be directly indicated as a single-tone signal and/or a multi-tone signal. If the second information indicates that there is only one type of the measurement signal that can be processed by the second node, that is, there is only a single-tone signal (or there is only a multi-tone signal), after receiving the second information indicating the capability, the first node may determine, based on the second information, the measurement signal that can be processed by the second node is the single-tone signal (or the multi-tone signal).

If the second information indicates that the type of the measurement signal that can be processed by the second node includes a single-tone signal and a multi-tone signal, in a possible implementation, the first node may randomly determine, from the two types, one type of the measurement signal as the type of the measurement signal processed by the second node. Alternatively, in another possible implementation, the first node may refer to a type of a measurement signal that can be processed by a node (referred to as a third node, for example, the third node 130 shown in FIG. 2) that exchanges a measurement signal with the second node. Specifically, because the second node and the third node send and receive measurement signals of each other, types of the measurement signals of the two nodes are the same. If the third node can process only a single-tone signal, the first node may determine that the measurement signal that can be processed by the second node is a single-tone signal. If the third node can process only a multi-tone signal, the first node may determine that the measurement signal that can be processed by the second node is a multi-tone signal. If the third node can process both a single-tone signal and a multi-tone signal, the first node may select one of the two signals as the type of the measurement signal exchanged between the second node and the third node. For determining of the type of the measurement signal processed by the third node, refer to descriptions of the second node. Details are not described herein.

In another implementation, the second information may indicate performance of a processor of the second node. For example, the second information may include a performance parameter of the processor. For example, the performance parameter of the processor may be one or more of the following parameters: a clock speed, a front-side bus speed, a memory, a cache, an operating voltage, or a multiplexer coefficient of a central processing unit (central processing unit, CPU).

When the performance parameter of the processor meets a preset condition, it indicates that the processor has a strong processing capability, and may process the multi-tone signal, and certainly may process the single-tone signal. In this case, after receiving the second information, the first node determines, based on the performance parameter of the processor in the second information, that the second node can process the single-tone signal and the multi-tone signal. In a possible implementation, the first node may randomly determine, from the two types, one type of the measurement signal as the type of the measurement signal processed by the second node. Alternatively, in another possible implementation, the first node may determine the type of the measurement signal processed by the second node based on a type of a measurement signal that can be processed by a node (for example, the third node) that exchanges a measurement signal with the second node. For specific implementation, refer to the foregoing descriptions. Details are not described herein.

When the performance parameter of the processor does not meet the preset condition, it indicates that the processor has a weak processing capability, and can process only the single-tone signal. In this case, after receiving the second information, the first node determines, based on the performance parameter of the processor in the second information, that the second node can process the single-tone signal. Further, the first node determines that the type of the measurement signal processed by the second node is the single-tone signal.

For example, the preset condition includes one or more of the following: The clock speed of the CPU falls within a first frequency range; the front-side bus speed falls within a second frequency range; a capacity of the memory falls within a first capacity range; a capacity of the cache falls within a second capacity range; the operating voltage falls within a first voltage range; or the multiplexer coefficient falls within a first value range. It may be understood that ranges of the parameters may be set based on actual application. This is not limited in embodiments of this application.

In another possible embodiment, the first node may determine, based on a performance requirement of the measurement, the type of the measurement signal sent and/or received by the second node. For example, the performance requirement includes at least one of the following: ranging precision, positioning precision, angle measurement precision, a ranging delay, a positioning delay, an angle measurement delay, a ranging range, or an angle measurement range. It may be understood that the ranging precision, the ranging delay, and the ranging range are performance requirements in a ranging scenario. The angle measurement precision, the angle measurement delay, and the angle measurement range are performance requirements in an angle measurement scenario. The positioning precision and the positioning delay are performance requirements in a positioning scenario. For example, in a scenario in which positioning is implemented after a distance is measured, the ranging range may also be a performance requirement in the positioning scenario. For ease of subsequent description, the ranging precision, the angle measurement precision, or the positioning precision may be collectively referred to as measurement precision. The ranging delay, the angle measurement delay, and the positioning delay are collectively referred to as a measurement delay. The ranging range and the angle measurement range are collectively referred to as a measurement range.

For example, during specific implementation, the second node or another node (for example, the third node) sends, to the first node, information indicating the performance requirement. For ease of subsequent description, the information is referred to as third information.

In a possible implementation, the third information includes the performance requirement, for example, including one or more values or value ranges of the measurement precision, the measurement delay, or the measurement range. It may be understood that the value or the value range may be determined based on actual application. This is not limited in embodiments of this application.

After receiving the third information, the first node may determine, based on the value or the value range of the performance requirement included in the third information, the type of the measurement signal sent and/or received by the second node. For ease of understanding, the following provides an example for description.

For example, in the ranging or positioning application scenario, wider bandwidth covered by the measurement signal sent for a single time indicates more frequency components included in the measurement signal (or a smaller spacing between frequency components), a larger measurement range, and a smaller measurement delay. Generally, the multi-tone signal sent for a single time covers wide bandwidth, and the single-tone signal sent for a single time covers narrow bandwidth. Therefore, measurement with a performance requirement for a large measurement range and/or a small measurement delay may be implemented by matching a multi-tone signal. However, measurement that has a low requirement for a measurement range and/or a measurement delay may be implemented by matching a single-tone signal.

For example, a value of the measurement range may be distinguished by setting a range threshold. When a value of the measurement range is less than the range threshold, the measurement range is small. When a value of the measurement range is greater than the range threshold, the measurement range is large. For example, it is assumed that the range threshold is 5 meters. When the value of the measurement range is less than 5 meters, it indicates that the measurement range is small. When the value of the measurement range is greater than 5 meters, it indicates that the measurement range is large. It may be understood that this is merely an example. During specific implementation, the value of the measurement range may alternatively be distinguished in another manner. This is not limited in embodiments of this application.

Similarly, for example, a requirement for the measurement delay may be distinguished by setting a delay threshold. A smaller value of the measurement delay indicates a higher requirement for the measurement delay. Therefore, when a value of the measurement delay is less than the delay threshold, the requirement for the measurement delay is high. When the value of the measurement delay is greater than the delay threshold, the requirement for the measurement delay is low. For example, it is assumed that the delay threshold is 1 second. When the value of the measurement delay is less than 1 second, it indicates that the requirement for the measurement delay is high. When the value of the measurement delay is greater than 1 second, it indicates that the requirement for the measurement delay is low. It may be understood that this is merely an example. During specific implementation, the requirement for the measurement delay may alternatively be distinguished in another manner. This is not limited in embodiments of this application.

For example, if the value or the value range of the performance requirement included in the third information is a value or a value range of the measurement delay, after receiving the third information, the first node obtains the value or the value range of the measurement delay in the third information. Then, the first node determines whether the value or the value range of the measurement delay falls within a preset delay range. The preset delay range is a range in which a delay value is less than the delay threshold. For example, it is assumed that the delay threshold is 1 second. The preset delay range is a range less than 1 second. Therefore, if the obtained value or value range of the measurement delay falls within the preset delay range, it indicates that the requirement for the measurement delay is high. The first node may determine that the type of the measurement signal processed by the second node is the multi-tone signal. If the obtained value or value range of the measurement delay does not fall within the preset delay range, it indicates that the requirement for the measurement delay is low. The first node may determine that the type of the measurement signal processed by the second node is the single-tone signal.

For example, if the value or the value range of the performance requirement included in the third information is a value or a value range of the measurement range, after receiving the third information, the first node obtains the value or the value range of the measurement range in the third information. Then, the first node determines whether the value or the value range of the measurement range falls within a preset range. The preset range is a range in which a range value is greater than the range threshold. For example, it is assumed that the range threshold is 5 meters, and the preset range is a range greater than 5 meters. Therefore, if the obtained value or value range of the measurement range falls within the preset range, it indicates that a requirement for the measurement range is high. The first node may determine that the type of the measurement signal processed by the second node is the multi-tone signal. If the obtained value or value range of the measurement range does not fall within the preset range, it indicates that the requirement for the measurement range is low. The first node may determine that the type of the measurement signal processed by the second node is the single-tone signal.

For example, in the angle measurement application scenario, when a requirement for the measurement precision is high and/or the requirement for the measurement range is low, the single-tone signal may be matched for implementation. When the requirement for the measurement precision is low and/or the requirement for the measurement range is high, the multi-tone signal may be matched for implementation. For example, a value of the measurement precision may be distinguished by setting a precision threshold. A smaller value of the measurement precision indicates higher measurement precision. Therefore, when the value of the measurement precision is less than the precision threshold, the measurement precision is high. When the value of the measurement precision is greater than the precision threshold, the measurement precision is low. For example, in the angle measurement scenario, it is assumed that the precision threshold of the angle measurement precision is 2°. In this case, when the value of the measurement precision is less than 2°, it indicates that the measurement precision is high. When the value of the measurement precision is greater than 2°, it indicates that the measurement precision is low. It may be understood that this is merely an example. During specific implementation, the value of the measurement precision may alternatively be distinguished in another manner. This is not limited in embodiments of this application. For distinguishing of the value of the measurement range, refer to the foregoing descriptions. Details are not described herein.

For example, if the value or the value range of the performance requirement included in the third information is the value or a value range of the measurement precision, after receiving the third information, the first node obtains the value or the value range of the measurement precision in the third information. Then, the first node determines whether the value or the value range of the measurement precision falls within a preset precision range. The preset precision range is a range in which a precision value is less than the precision threshold. For example, in the angle measurement scenario, it is assumed that the precision threshold is 2°, and the preset precision range is a range less than 2°. Therefore, if the obtained value or value range of the measurement precision falls within the preset precision range, it indicates that a requirement for the measurement precision is high. The first node may determine that the type of the measurement signal processed by the second node is the multi-tone signal. If the obtained value or value range of the measurement precision does not fall within the preset precision range, it indicates that the requirement for the measurement precision is low. The first node may determine that the type of the measurement signal processed by the second node is the single-tone signal.

In a possible implementation, the third information may include at least two values or value ranges of the measurement precision, the measurement delay, or the measurement range. Then, the first node may determine, based on the at least two values or value ranges, the type of the measurement signal processed by the second node. For example, if the third information includes the value or the value range of the measurement range and the value or the value range of the measurement delay, after receiving the third information, the first node may determine, based on a determining result obtained based on the measurement range and a determining result obtained based on the measurement delay, the type of the measurement signal processed by the second node.

For example, if a type determined based on the value or the value range of the measurement range is the same as a type determined based on the value or the value range of the measurement delay, for example, a multi-tone signal (or a single-tone signal), the first node may determine that the type of the measurement signal processed by the second node is the multi-tone signal (or the single-tone signal).

For another example, if the type determined based on the value or value range of the measurement range is different from the type determined based on the value or value range of the measurement delay, for example, one determined type is a single-tone signal, and the other determined type is a multi-tone signal, the first node may determine that the type of the measurement signal processed by the second node is the multi-tone signal, to meet a higher requirement in the requirement for the measurement range and the requirement for the measurement delay. It may be understood that this is merely an example, and does not constitute a limitation on embodiments of this application.

In another possible implementation, the third information includes an index of the performance requirement of the measurement. The index of the performance requirement may be pre-configured. For ease of understanding, the following uses an example in which the performance requirement includes the measurement range and the measurement delay for description. For example, refer to Table 1.

**Table 1**

| Index | Requirement for a measurement range | Requirement for a measurement delay | Type of a matched measurement signal |
|---|---|---|---|
| Index 1 | High | High | Multi-tone signal |
| Index 2 | High | Low | Multi-tone signal |
| Index 3 | Low | Low | Single-tone signal |
| Index 4 | Low | High | Multi-tone signal |

It can be seen from Table 1 that different indexes correspond to different performance requirements. For example, the index 1 may indicate that requirements for both the measurement range and the measurement delay in the performance requirement of the measurement are high, and the type of the measurement signal matching the index 1 is the multi-tone signal. After receiving the third information, the first node obtains the index in the third information. If the index obtained from the third information is the index 1, it may be determined, based on the index 1, that the type of the measurement signal processed by the second node is the multi-tone signal. Use of other indexes is the same. Details are not described again.

For example, the index of the performance requirement may be represented by a number, a letter, a special character, or any combination thereof. Alternatively, the index of the performance requirement may be indicated by a flag field included in the third information. A specific representation of the index is not limited in embodiments of this application.

It may be understood that a manner, described in the foregoing, of determining the type of the measurement signal processed by the second node is merely an example, and does not constitute a limitation on embodiments of this application.

S302: The first node sends first information to the second node, where the first information indicates the type of the measurement signal, and the type of the measurement signal includes a single-tone signal or a multi-tone signal.

During specific implementation, after determining the type of the measurement signal processed by the second node, the first node may generate the first information. The first information carries information indicating the type of the measurement signal processed by the second node. Then, the first information is sent to the second node.

S303: The second node receives the first information.

S304: The second node sends or receives a first measurement signal, where the first measurement signal is used for the measurement.

After receiving the first information, the second node determines, based on the information, the type of the measurement signal received and/or sent by the second node. Then, when participating in the measurement, the second node generates a measurement signal of this type and sends the measurement signal to another node (for example, the third node). Alternatively, when participating in the measurement, the second node receives a measurement signal of this type from another node (for example, the third node). Further, the measurement task is completed based on the sent and/or received measurement signal of this type, that is, ranging, angle measurement, or positioning of the measured node is completed.

In a possible embodiment, the information that is carried in the first information and that indicates the type of the measurement signal processed by the second node may be an index or an identifier of this type. The index or the identifier of this type may be pre-configured. For example, the index or the identifier of the single-tone signal may be "S", and the index or the identifier of the multi-tone signal may be "M". This is merely an example, and does not constitute a limitation on embodiments of this application. The index or the identifier of this type may be represented by a number, a letter, a special character, or any combination thereof. Alternatively, the index or the identifier of this type may be indicated by a flag field included in the first information. A specific representation of the index or the identifier is not limited in embodiments of this application.

In a possible implementation, a frequency, a period, amplitude, and the like of the single-tone signal sent or received in the foregoing measurement process may be pre-configured. In this case, after determining, based on the received first information, that the type of the measurement signal sent and/or received by the second node is the single-tone signal, the second node may determine, based on the pre-configuration, information like a frequency, a period, and amplitude of a measurement signal sent and/or received in a subsequent measurement process.

In another possible implementation, a frequency, a frequency spacing, a quantity of frequency components, a period, amplitude, and the like of the multi-tone signal sent or received in the foregoing measurement process may be pre-configured. In this case, after determining, based on the received first information, that the type of the measurement signal sent and/or received by the second node is the multi-tone signal, the second node may determine, based on the pre-configuration, information like a frequency, a frequency spacing, a quantity of frequency components, a period, and amplitude of a measurement signal sent and/or received in a subsequent measurement process.

In another possible implementation, configuration information (including the first information, the second information, and/or other information) sent by the first node to the second node further includes other configuration information of the measurement signal. The second node further determines, based on the other configuration information, a parameter for sending and/or receiving the measurement signal. This is not limited in this application. For example, the other configuration information is resource configuration information, and the second node determines, based on the resource configuration information, a resource (for example, a time domain/frequency domain/time-frequency resource) for sending and/or receiving the measurement signal.

In a possible embodiment, the information that is carried in the first information and that indicates the type of the measurement signal processed by the second node may include a quantity N of simultaneously communicated frequency components in the measurement signal. N may be an integer greater than or equal to 1.

For example, the type of the measurement signal may be determined based on the quantity N, included in the first information, of frequency components. For example, if N in the first information is equal to 1, it indicates that one frequency component is simultaneously communicated in the measurement signal. In this case, it indicates that the type of the measurement signal is the single-tone signal. After receiving the first information, the second node may determine, based on that a value of N is 1, that the type of the measurement signal processed by the second node is the single-tone signal.

If N in the first information is greater than 1, it indicates that there are a plurality of simultaneously communicated frequency components in the measurement signal. In this case, it indicates that the type of the measurement signal is the multi-tone signal. After receiving the first information, the second node may determine, based on that the value of N is greater than 1, that the type of the measurement signal processed by the second node is the multi-tone signal, and determine the quantity of frequency components that are simultaneously communicated, that is, determining a quantity of tones of the measurement signal.

In a possible embodiment, the information that is carried in the first information and that indicates the type of the measurement signal processed by the second node may include a frequency spacing between frequency components in the measurement signal.

For example, the type of the measurement signal may be determined based on the frequency spacing included in the first information. For example, if the frequency spacing in the first information is equal to a frequency spacing of a hopping frequency channel, it indicates that a measurement signal with only one frequency component is communicated through one hopping frequency channel, that is, the communicated measurement signal is a single-tone signal. After receiving the first information, the second node may determine, based on the frequency spacing, that the type of the measurement signal processed by the second node is the single-tone signal. The hopping frequency channel is a channel used by the second node to send the measurement signal in a hopping frequency manner. Each hopping frequency channel corresponds to one center frequency, and the frequency spacing of the hopping frequency channel is a spacing between center frequencies corresponding to two hopping frequency channels adjacent in frequency domain. The hopping frequency channel may be configured by the master node, that is, the first node.

If the frequency spacing, in the first information, between the frequency components in the measurement signal is less than the frequency spacing of the hopping frequency channel, it indicates that a measurement signal with a plurality of frequency components may be simultaneously communicated through one hopping frequency channel, that is, the communicated measurement signal is a multi-tone signal. For example, the frequency spacing may be obtained by dividing the frequency spacing of the hopping frequency channel by the quantity N of simultaneously communicated frequency components in the measurement signal. After receiving the first information, the second node may determine, based on that the frequency spacing, that the type of the measurement signal processed by the second node is the multi-tone signal, and determine the frequency spacing between the simultaneously communicated frequency components in the measurement signal.

In another implementation, the information that is carried in the first information and that indicates the type of the measurement signal processed by the second node may include an index of the frequency spacing between the frequency components in the measurement signal. The index of the frequency spacing may be pre-configured. After receiving the first information, the second node may determine the frequency spacing between the frequency components in the measurement signal based on the index. For a processing operation after the frequency spacing is determined, refer to the foregoing descriptions. Details are not described herein.

In a possible embodiment, the information that is carried in the first information and that indicates the type of the measurement signal processed by the second node may include a modulation scheme of the measurement signal or an index of a modulation scheme of the measurement signal. The index of the modulation scheme may be pre-configured. After receiving the first information, the second node may determine the modulation scheme of the measurement signal based on the index. For example, the modulation scheme may be a modulation scheme like PSK or GFSK. A specific modulation scheme is not limited in embodiments of this application. After determining the modulation scheme of the measurement signal, the second node may modulate a sent measurement signal based on the determined modulation scheme in a subsequent measurement process.

It may be understood that the first information may include a plurality of pieces of information, for example, may include three pieces of information. For ease of description, the three pieces of information may be referred to as information A, information B, and information C. The information A indicates the quantity of simultaneously communicated frequency components in the measurement signal. The information B indicates the frequency spacing between the frequency components in the measurement signal. The information C indicates the modulation scheme of the measurement signal. Alternatively, the first information may include two pieces of information. One piece of information indicates the quantity of simultaneously communicated frequency components in the measurement signal and the frequency spacing between the frequency components. The other information indicates the modulation scheme of the measurement signal. This is merely an example, and does not constitute a limitation on embodiments of this application.

In another possible implementation, the first node may send one piece of information (for example, the first information) to the second node to indicate the type of the measurement signal processed by the second node, and send other information to the second node to indicate one or more of the quantity N of frequency components, the spacing between the frequency components, and the modulation scheme of the measurement signal. Similarly, it may be understood that the other information may include a plurality of pieces of information, and the plurality of pieces of information are sent to indicate corresponding content to the second node. For details, refer to the foregoing descriptions. Details are not described herein. Alternatively, in another implementation, the first information and the other information may be same information. In other words, the same information may indicate the type of the measurement signal, and may further indicate one or more of the quantity N of frequency components, the spacing between the frequency components, and the modulation scheme of the measurement signal. Alternatively, in another implementation, the first information and the other information may be information communicated in a same message (message, MSG). Alternatively, the first information and the other information may be information communicated in different messages.

It may be understood that, regardless of indicating the type, namely, the single-tone signal or the multi-tone signal, indicating the quantity N of frequency components, the spacing between the frequency components, and the modulation scheme of the measurement signal, and the like, the information sent by the first node to the second node may indicate the parameter. Alternatively, a protocol may specify a limited quantity of optional parameter values, and each optional parameter value corresponds to one index value. The information sent by the first node to the second node indicates a corresponding index value, to indicate a corresponding parameter (that is, indicating the type, the quantity N of frequency components, the spacing between the frequency components, the modulation scheme, or the like of the measurement signal). Alternatively, a corresponding parameter value may be calculated, in a calculation manner specified in the protocol, based on a value indicated by the information sent by the first node to the second node. Alternatively, another implementation may be used. This is not limited in embodiment of this application.

In a possible embodiment, the first measurement signal sent or received by the second node may be a signal obtained by adding a disturbance signal to an original measurement signal. If the first measurement signal is a signal sent by the second node, the original measurement signal is a signal on which disturbing is not performed and that is generated by the second node based on the determined type of the measurement signal. If the first measurement signal is a signal received by the second node, the original measurement signal is a signal on which disturbing is not performed and that is generated by a node (for example, the third node) that sends the first measurement signal. The following uses an example in which the first measurement signal is a signal sent by the second node for description.

In a possible implementation, a quantity of times of adding a disturbance signal to the original measurement signal and/or a location of the disturbance signal may be determined based on a random seed (random seed). The random seed may be configured by the master node.

For example, the location may be a time location. During specific implementation, the first measurement signal is communicated on a first time resource configured by the first node. The first time resource includes at least M time units, and M is an integer greater than 1. For example, the first measurement signal is specifically communicated on the M time units. For example, refer to FIG. 5A. Each time unit may be considered as a time location. In this case, the first communication resource includes M time locations.

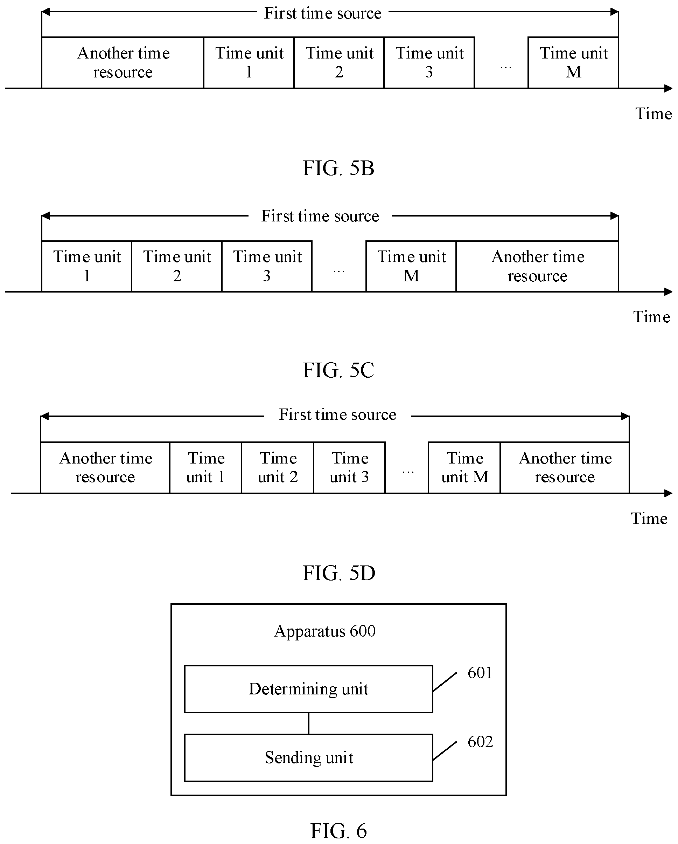

In another possible implementation, in addition to the M time units used to communicate the first measurement signal, the first time resource may further include another time resource. For example, the another time resource may be used to communicate at least one of a signal, signaling, and data. For example, the signal may be a preamble signal and/or a synchronization signal. For example, the signaling may be control signaling. For example, the data may be service data. Specific information that is communicated on the another time resource is not limited in embodiments of this application. For example, the another time resource may be located before the M time units. For example, refer to FIG. 5B. Alternatively, for example, the another time resource may be located after the M time units. For example, refer to FIG. 5C. Alternatively, for example, the another time resource may be located before and after the M time units. For example, refer to FIG. 5D. For example, a length of the another time resource may be greater than a length of the single time unit. Alternatively, a length of the another time resource may be less than or equal to a length of the single time unit. The length of the another time resource is not limited in embodiments of this application. For example, the first time resource may be a time resource of a radio frame or a measurement frame. In other words, information communicated via the radio frame or the measurement frame includes the first measurement signal, and may further include at least one piece of information like the preamble signal, the synchronization signal, the control signaling, and the service data.

For example, the length of the time unit may be one or more lengths of one or more symbols in the first time resource. The symbol may be a basic unit of signal modulation. For example, it is assumed that the first time resource includes 10 symbols. If the length of the time unit is a length of one symbol, the first time resource includes 10 time units. If the length of the time unit is a length of two symbols, the first time resource includes five time units. It may be understood that this is merely an example. During specific implementation, a quantity of symbols included in the first time resource and a specific length of the time unit may be set based on actual application. This is not limited in embodiments of this application.

Alternatively, for example, the length of the time unit may be a reciprocal of a hopping frequency spacing of the measurement signal sent and/or received by the second node.

Alternatively, for example, when the first measurement signal is a multi-tone signal, the length of the time unit may be a reciprocal of a frequency spacing of the multi-tone signal. It may be understood that this is merely an example, and does not constitute a limitation on embodiments of this application.

For example, the adding the disturbance signal may be replacing a signal that is preset to be communicated on a time unit with a disturbance signal. After the replacement, the disturbance signal is communicated on the time unit. For ease of subsequent description, the signal that is preset to be communicated on the time unit may be referred to as an original signal. Replacing an original signal in a time unit with a disturbance signal is adding a disturbance signal for one time. In this case, the quantity of times of adding the disturbance signal is equal to a quantity of time units in which the communicated signal is replaced.

In a possible implementation, the disturbance signal is a phase-inverted signal of the original signal. The phase-inverted signal is a signal that has same amplitude as and an opposite phase to the original signal. For example, the disturbance signal may be a signal obtained by multiplying the original signal by -1. The disturbance signal and the original signal have same amplitude, to avoid a sudden change in energy of the measurement signal, and ensure that a signal communicated on each time unit in a communication resource can have a sufficient signal-to-noise ratio. A phase of the disturbance signal is opposite to that of the original signal, to suppress, when energy of a time unit on which a communicated signal is replaced is leaked to another time unit, impact (only the amplitude is affected, and the phase is not affected) of the energy on a phase of a signal communicated on the another time unit. This ensures performance of measuring channel phase information. It may be understood that this is merely an example, and does not constitute a limitation on embodiments of this application. During specific implementation, the disturbance signal may alternatively be another signal, for example, may be a signal orthogonal to the original signal or a pseudo-randomly generated signal. A type of the disturbance signal and a manner of generating the disturbance signal are not limited in embodiments of this application.

During specific implementation, the first node may send, to the second node, information indicating the random seed. For ease of subsequent description, the information is referred to as fourth information, and the random seed is referred to as a first random seed. After receiving the fourth information, the second node obtains the first random seed, and determines, based on the first random seed, the quantity of times of adding the disturbance signal to the first measurement signal and/or the time location of the disturbance signal.

In a possible implementation, it may be determined, based on the first random seed, whether the disturbance signal is communicated on each of the M time units in the first time resource. For example, whether the disturbance signal is communicated on an i^{th} time unit in the M time units may be determined based on the first random seed, the first time resource, and i, and i is any integer from 1 to M. During specific implementation, the first time resource may include a plurality of slots, and each slot may include a plurality of symbols. For example, that whether the disturbance signal is communicated on the i^{th} time unit is determined based on the first random seed the first time resource, and i may be determining based on the first random seed, a serial number of a start slot in the plurality of slots included in the first time resource, and i.

For example, the second node may input the first random seed, a serial number i of the i^{th} time unit, and the serial number of the start slot in the first time resource together into a function (referred to as a first function) for calculation, to obtain a calculation result. The calculation result may be a random number (referred to as a first random number). Then, the second node determines, based on the first random number, whether the disturbance signal is communicated on the i^{th} time unit. For example, if the first random number is an odd number, the second node determines that the disturbance signal is communicated on the i^{th} time unit. If the first random number is an even number, the second node determines that the disturbance signal is not communicated on the i^{th} time unit. Alternatively, for example, if the first random number is greater than a preset value, the second node determines that the disturbance signal is communicated on the i^{th} time unit. If the first random number is less than the preset value, the second node determines that the disturbance signal is not communicated on the i^{th} time unit. It may be understood that this is merely an example, and does not constitute a limitation on embodiments of this application. During specific implementation, after obtaining the calculation result, the second node may determine, according to any preset rule, whether the disturbance signal is communicated on the i^{th} time unit. This is not limited in embodiments of this application. In addition, the first function may be a random function or a user-defined function. This is not limited in embodiments of this application either.

If the second node determines that the disturbance signal is communicated on the i^{th} time unit, the second node replaces an original signal communicated on the i^{th} time unit with the disturbance signal, and the disturbance signal that replaces the original signal is communicated on the i^{th} time unit. If the second node determines that the disturbance signal is not communicated on the i^{th} time unit, the second node still communicates the original signal on the i^{th} time unit.

In a possible implementation, the second node may first determine, based on the first random seed, the quantity of times of adding the disturbance signal to the first measurement signal, and further determine the location at which the disturbance signal is added each time. For example, the first node may first determine the quantity of times based on the first random seed and the first time resource. Specifically, the quantity of times may be determined based on the first random seed and the serial number of the start slot in the first time resource. For example, the first random seed and the serial number of the start slot may be input to a function (referred to as a second function) for calculation, to obtain a random number (referred to as a second random number) through calculation. The second random number may be used as the quantity of times of adding the disturbance signal. Alternatively, the second random number may further be processed, for example, a number obtained by performing calculation on the second random number and a preset value is used as the quantity of times of adding the disturbance signal. The performing calculation on the second random number and the preset value may be performing an operation like addition, subtraction, multiplication, division, or a modulo operation on the second random number and the preset value. It may be understood that this is merely an example, and does not constitute a limitation on embodiments of this application. The second function may be a random function or a user-defined function. This is not limited in embodiments of this application either.

It is assumed that the quantity of times of adding the disturbance signal that is determined by the second node based on the first random seed and the serial number of the start slot is L, where L is an integer greater than 0 and less than M. Then, the second node further obtains, through calculation based on the quantity of times of adding the disturbance signal, the first random seed, and the serial number of the start slot, a time location, in the first measurement signal, of a disturbance signal corresponding to the serial number. In other words, a time location, in the first measurement signal, of a j^{th} disturbance signal in the L disturbance signals may be determined based on the first random seed, the serial number of the start slot in the first time resource, and j, and j is an integer greater than 0 and less than or equal to L.

Specifically, the first random seed, the serial number of the start slot, and j may be input to a function (referred to as a third function) for calculation, to obtain a random number (referred to as a third random number) through calculation. The third random number may indicate the time location, in the first measurement signal, of the j^{th} disturbance signal. It can be learned from the foregoing descriptions that the time location is a time unit in the first time resource, and a corresponding serial number is configured for each time unit. In a possible implementation, the third random number obtained through calculation is used as the serial number of the time unit. Further, it may be determined that the time location, in the first measurement signal, of the j^{th} dither signal is a time unit whose serial number is the third random number.

In another possible implementation, the third random number may further be processed, for example, a number obtained by performing calculation on the third random number and a preset value is used as the serial number of the time unit. The performing calculation on the third random number and the preset value may be performing an operation like addition, subtraction, multiplication, division, or a modulo operation on the third random number and the preset value. It may be understood that this is merely an example, and does not constitute a limitation on embodiments of this application. The third function may be a random function or a user-defined function. This is not limited in embodiments of this application either.

In a possible embodiment, the random seed used to determine the quantity of times of adding the disturbance signal and the random seed used to determine the location at which the disturbance signal is added may be different random seeds. In this case, the first random seed may include two sub-random seeds (which are referred to as a sub-random seed A and a sub-random seed B). The random seed A may be used to determine the quantity of times of adding the disturbance signal. For example, the random seed A and the serial number of the start slot may be input to the second function for calculation, to obtain the random number. Further, the quantity of times of adding the disturbance signal is determined. For details, refer to the foregoing descriptions. Details are not described herein. Then, the random seed B is used to determine the location at which the disturbance signal is added. For example, the random seed B, the serial number of the start slot, and j are input to the third function for calculation, to obtain the random number. Further, the time location, in the first measurement signal, of the j^{th} disturbance signal is determined. For details, refer to the foregoing descriptions. Details are not described herein.

It may be understood that the second node sends, to another node (for example, the third node), the first measurement signal obtained by adding the disturbance signal. The third node may also determine, in the same processing manner as the second node, the quantity of times of adding the disturbance signal to the first measurement signal and the time location of the disturbance signal, so that the third node can restore, from the first measurement signal, a signal from which the disturbance signal is removed. Further, after the first measurement signal is received, the disturbance signal may be filtered out. A random seed that is in the third node and that is used to determine the quantity of times of adding the disturbance signal to the first measurement signal and the time location of the disturbance signal also comes from the master node, that is, the first node, and the random seed is the same as the random seed used by the second node. Therefore, the quantity of times of adding the disturbance signal to the first measurement signal and the time location of the disturbance signal can be determined.

If the first measurement signal is a signal received by the second node, for a specific implementation of processing the first measurement signal by the second node, refer to the foregoing descriptions of the third node. Details are not described herein.

After the disturbance signal is added, regularity of the measurement signal can be damaged, to effectively prevent an attacker from forging a result measurement signal to mislead a measurement result. Specifically, disturbance signals are added to random locations, and a quantity of times of adding disturbance signals is also random, to increase randomness of the measurement signal. Therefore, it is difficult for the attacker to forge a measurement signal including disturbance signals. When received measurement signals include the forged signal, an authorized receive end may identify, based on a feature of the disturbance signal, that the measurement signals include the forged signal. For example, the receive end detects presence of the disturbance signal at the location of the disturbance signal, a signal-to-noise ratio of the disturbance signal, or another feature of the disturbance signal, to determine whether the received measurement signals include the forged signal. However, it is difficult for the attacker to determine the quantity of times of adding the disturbance signal and the time location of the disturbance signal. Therefore, it is difficult for the attacker to send the disturbance signal at the time location of the disturbance signal, to effectively prevent the signal from being forged.

In another possible implementation, the quantity of times L of adding the disturbance signal to the first measurement signal is far less than the quantity M of time units. For example, L is only one tenth, one twentieth, or one hundredth of M. This is not limited in embodiments of this application. In the foregoing implementation, the quantity of times of adding the disturbance signal to the first measurement signal is first determined based on the first random seed, and the time location at which the disturbance signal is added each time is further determined. Compared with the foregoing implementation of separately calculating whether the disturbance signal is added to each time unit, this implementation can greatly save computing resources.

In a possible embodiment, after the first node sends the fourth information to the second node, whether the second node adds the disturbance signal to the first measurement signal based on the first random seed indicated in the fourth information may further be indicated by the first node.

In a possible implementation, in addition to information indicating the first random seed, the fourth information may further include information indicating whether to add the disturbance signal to the measurement signal. If the fourth information indicates to add the disturbance signal to the measurement signal, the second node adds the disturbance signal to the first measurement signal based on the first random seed. If the fourth information indicates not to add the disturbance signal to the measurement signal, after receiving the fourth information, the second node may obtain and store the first random seed, to wait for a subsequent use indication.

In another possible implementation, the first node may further send, to the second node, information indicating whether to add the disturbance signal to the measurement signal. The information may be sent before or after the fourth information is sent. This is not limited in embodiments of this application.

Because the quantity of times of adding the disturbance signal to the measurement signal and the time location of the disturbance signal need to be calculated, a large quantity of computing resources are consumed. In embodiments of this application, the master node determines, in a manner of sending information for indication, whether to add the disturbance signal to the measurement information, to save computing resources of the node in a scenario in which disturbing is not required.

In a possible embodiment, an initial phase of the first measurement signal sent or received by the second node may be determined based on a random seed.

In a specific embodiment, the first node may send, to the second node, information indicating the random seed used to randomly generate the initial phase of the measurement signal. For ease of subsequent description, the information is referred to as fifth information, and the random seed is referred to as a second random seed. The following uses an example in which the first measurement signal is a signal received by the second node for description.

After receiving the fifth information, the second node obtains the second random seed, and generates, based on the second random seed, an initial phase of the frequency component of the first measurement signal. The initial phase is an initial phase for sending a corresponding frequency component.

For example, if the first measurement signal is a single-tone signal, the second random seed may be input to a function (referred to as a fourth function), to obtain a random number (referred to as a fourth random number) through calculation. An initial phase of the single-tone signal may be determined based on the fourth random number. For example, the fourth random number may directly be used as a value of the initial phase of the single-tone signal. Alternatively, the fourth random number may further be processed, for example, a number obtained by performing calculation on the fourth random number and a preset value is used as the value of the initial phase of the single-tone signal. The performing calculation on the fourth random number and the preset value may be performing an operation like addition, subtraction, multiplication, division, or a modulo operation on the fourth random number and the preset value. It may be understood that this is merely an example, and does not constitute a limitation on embodiments of this application. The fourth function may be a random function or a user-defined function. This is not limited in embodiments of this application either.

Alternatively, in another implementation, the second random seed and the serial number of the start slot in the first time resource may be input to the fourth function, to obtain a random number. Then, an initial phase of the single-tone signal may be determined based on the random number. For details, refer to the foregoing descriptions. Details are not described herein.

If the first measurement signal is a multi-tone signal, the second node may generate an initial phase of each of the N frequency components in the multi-tone signal based on the second random seed. For example, the second random seed and a serial number k of a k^{th} frequency component may be input into a function (referred to as a fifth function), or the second random seed, the serial number k of the k^{th} frequency component, and the serial number of the start slot in the first time resource may be input into the fifth function, to obtain a random number (referred to as a k^{th} random number) through calculation. An initial phase of the k^{th} frequency component may be determined based on the k^{th} random number, where k an integer from 1 to N. For example, the k^{th} random number may directly be used as a value of the initial phase of the k^{th} frequency component. Alternatively, the k^{th} random number may further be processed, for example, a number obtained by performing calculation on the k^{th} random number and a preset value is used as the value of the initial phase of the k^{th} frequency component. The performing calculation on the k^{th} random number and the preset value may be performing an operation like addition, subtraction, multiplication, division, or a modulo operation on the k^{th} random number and the preset value. It may be understood that this is merely an example, and does not constitute a limitation on embodiments of this application. The fifth function may be a random function or a user-defined function. This is not limited in embodiments of this application either.

In another possible implementation, the second node may generate a time offset Δt based on the second random seed. Then, an initial phase of each of the N frequency components is obtained through calculation based on the time offset and a preset phase combination.

For example, the second random seed may be input into a function (referred to as a sixth function), or the second random seed and the serial number of the start slot in the first time resource may be input into the sixth function, to obtain a random number (referred to as a sixth random number) through calculation. The time offset Δt may be determined based on the sixth random number. For example, the sixth random number may directly be used as the time offset Δt. Alternatively, the sixth random number may further be processed, for example, a number obtained by performing calculation on the sixth random number and a preset value is used as the time offset Δt. The performing calculation on the sixth random number and the preset value may be performing an operation like addition, subtraction, multiplication, division, or a modulo operation on the sixth random number and the preset value. It may be understood that this is merely an example, and does not constitute a limitation on embodiments of this application. The sixth function may be a random function or a user-defined function. This is not limited in embodiments of this application either.

The preset phase combination may be a combination of phases (which are referred to as generation phases) of N frequency components in an original measurement signal when the second node generates the original measurement signal corresponding to the first measurement signal. For example, the generation phases of the N frequency components may be configured by a protocol or the master node, that is, the preset phase combination is configured by the protocol or the master node.

In this case, after obtaining the time offset Δt, the second node may calculate the initial phase of the k^{th} frequency component according to the following formula: φₖ = fₖ * Δt + φₖ₀. φₖ indicates the initial phase of the k^{th} frequency component, fₖ indicates a center frequency of the k^{th} frequency component, and φₖ₀ indicates a generation phase of the k^{th} frequency component.

After determining the initial phase of each frequency component of the first measurement signal in the foregoing manner, the second node sends the first measurement signal based on the determined initial phase.

It may be understood that the foregoing implementation of determining the initial phase of each frequency component of the first measurement signal is merely an example, and does not constitute a limitation on embodiments of this application. In this solution, the initial phase of the first measurement signal is randomly changed, to damage regularity of the first measurement signal, and reduce a risk of eavesdropping on the measurement signal. In addition, in embodiments of this application, the initial phase of the measurement signal is random, and it is difficult for an eavesdropper to know a phase of the original measurement signal. Even if the measurement signal is received, it is difficult to infer channel phase information, and obtain a location of the measured node through eavesdropping. Therefore, the measurement signal is protected.

In a possible implementation, the first random seed may be the same as or different from the second random seed. For example, if the first random seed is the same as the second random seed, the fourth information and the fifth information may be the same information.

In conclusion, in this solution, the master node may determine the type of the measurement signal sent or received by the node, and indicate the node to use the measurement signal of the specific type, so that the node can implement ranging, angle measurement, or positioning. In addition, in this solution, the solution of disturbing the measurement signal and randomly setting the initial phase of the measurement signal is further provided, to effectively damage regularity of the measurement signal, and reduce a risk of eavesdropping on or forging the measurement signal.

The foregoing mainly describes the measurement signal processing method provided in embodiments of this application. It may be understood that, to implement the foregoing corresponding functions, each node includes a corresponding hardware structure and/or a corresponding software module for performing the functions. In combination with example units and steps described in embodiments disclosed in this specification, this application can be implemented by hardware or a combination of hardware and computer software. Whether a function is executed by hardware or hardware driven by computer software depends on particular applications and design constraint conditions of the technical solutions. A person skilled in the art may use different methods to implement the described functions for each particular application, but it should not be considered that the implementation goes beyond the scope of embodiments of this application.

In embodiments of this application, the node may be divided into functional modules based on the foregoing method examples. For example, functional modules corresponding to the functions may be obtained through division, or two or more functions may be integrated into one module. The integrated module may be implemented in a form of hardware, or may be implemented in a form of a software functional module. It should be noted that, in embodiments of this application, division into the modules is an example and is merely logical function division, and may be other division during actual implementation.

When each functional module corresponding to each function is obtained through division, FIG. 6 is a diagram of a possible logical structure of an apparatus 600. The apparatus 600 may be the first node, a chip in the first node, a processing system in the first node, or the like. The apparatus 600 includes a determining unit 601 and a sending unit 602.

The determining unit 601 is configured to determine a type of a measurement signal sent and/or received by a second node. The apparatus 600 is a master node, the second node is a slave node, the second node is a measurement node or a measured node, and the measurement is ranging, angle measurement, or positioning performed on the measured node. The determining unit 601 may be configured to perform the determining operation in S301 in FIG. 3.

The sending unit 602 is configured to send first information to the second node. The first information indicates the type of the measurement signal, and the type of the measurement signal includes a single-tone signal or a multi-tone signal. The sending unit 602 may be configured to perform the sending operation in S302 in FIG. 3.

In a possible implementation, the sending unit 602 is further configured to send second information to the second node, and the second information indicates one or more of the following:
a quantity N of simultaneously communicated frequency components in the measurement signal, where N is an integer greater than or equal to 1;
a frequency spacing between frequency components in the measurement signal; and
a modulation scheme of the measurement signal.

In a possible implementation, the apparatus 600 further includes a receiving unit, configured to receive second information from the second node, the second information indicates a capability of sending and/or receiving the measurement signal of the second node, and the capability is used to determine the type of the measurement signal.

In a possible implementation, the apparatus 600 further includes an obtaining unit, configured to obtain a performance requirement of the measurement, and the performance requirement includes at least one of the following: ranging precision, positioning precision, angle measurement precision, a ranging delay, a positioning delay, an angle measurement delay, a ranging range, or an angle measurement range.

In a possible implementation, the sending unit 602 is further configured to:
send third information to the second node, where the third information indicates a first random seed, and the first random seed is used to determine a quantity of times of adding a disturbance signal to the measurement signal and/or a time location of the disturbance signal.

In a possible implementation, the disturbance signal is a phase-inverted signal of an original signal.

In a possible implementation, the sending unit 602 is further configured to:
send fourth information to the second node, where the fourth information indicates a second random seed, and the second random seed is used to determine an initial phase of a frequency component of the measurement signal.

In a possible implementation, when the measurement signal is a multi-tone signal,
the second random seed is used to generate an initial phase of each frequency component of the measurement signal; or
the second random seed is used to generate a time offset, and an initial phase of each frequency component of the measurement signal is determined based on the time offset and a preset phase combination.

In a possible implementation, the sending unit 602 is further configured to:
send sixth information to the second node, where the sixth information indicates whether to add the disturbance signal to the measurement signal, and/or indicates whether to randomize the initial phase of the measurement signal.

For specific operations of the units in the apparatus 600 shown in FIG. 6 and beneficial effect, refer to the descriptions in the method and the possible implementations of the method in FIG. 3. Details are not described herein again.

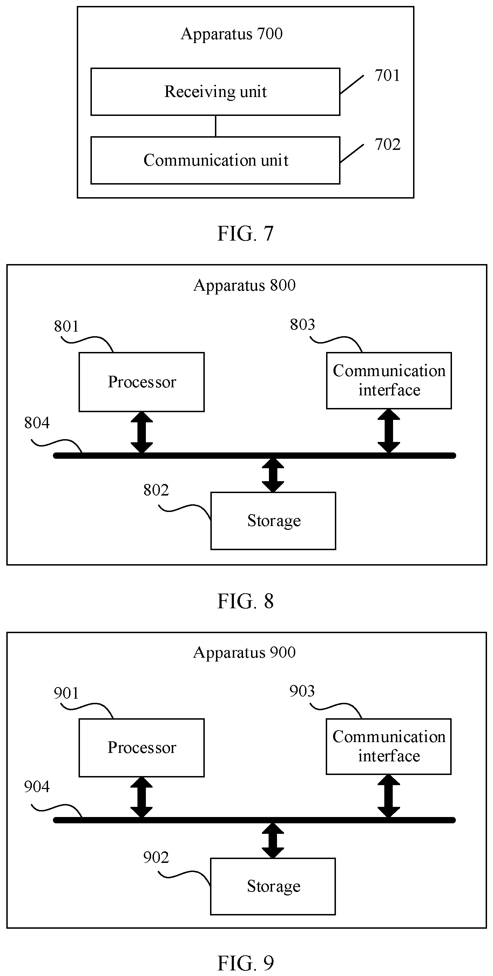

When each functional module corresponding to each function is obtained through division, FIG. 7 is a diagram of a possible logical structure of an apparatus 700. The apparatus 700 may be the second node, a chip in the second node, a processing system in the second node, or the like. The apparatus 700 includes a receiving unit 701 and a communication unit 702.

The receiving unit 701 is configured to receive first information from a first node. The first information indicates a type of a measurement signal sent and/or received by the apparatus 700, the type of the measurement signal includes a single-tone signal or a multi-tone signal, the first node is a master node, the apparatus 700 is a slave node, the apparatus 700 is a measurement node or a measured node, and the measurement is ranging, angle measurement, or positioning performed on the measured node. The receiving unit 701 may be configured to perform the receiving operation in S303 in FIG. 3.

The communication unit 702 is configured to send or receive a first measurement signal. The first measurement signal is used for the measurement. The communication unit 702 may be configured to perform the sending or receiving operation in S304 in FIG. 3.

In a possible implementation, that the first information indicates a type of a measurement signal sent and/or received by the apparatus 700 includes that the first information indicates one or more of the following:
a quantity N of simultaneously communicated frequency components in the measurement signal, where N is an integer greater than or equal to 1;
a frequency spacing between frequency components in the measurement signal; and
a modulation scheme of the measurement signal.

In a possible implementation, the apparatus 700 further includes a sending unit, configured to send second information to the first node, and the second information indicates a capability of sending and/or receiving the measurement signal of the apparatus 700.

In a possible implementation, the apparatus 700 further includes the sending unit, configured to send, to the first node, information indicating a performance requirement, the information indicating the performance requirement indicates the performance requirement of the measurement, and the performance requirement includes at least one of the following: ranging precision, positioning precision, angle measurement precision, a ranging delay, a positioning delay, an angle measurement delay, a ranging range, or an angle measurement range.

In a possible implementation, the receiving unit 701 is further configured to:
receive third information from the first node, where the third information indicates a first random seed, and the first random seed is used to determine a quantity of times of adding a disturbance signal to the first measurement signal and/or a time location of the disturbance signal.

In a possible implementation, the disturbance signal is a phase-inverted signal of an original signal.

In a possible implementation, the first measurement signal is communicated on a first time resource, the first time resource includes at least M time units, and M is an integer greater than 1.

Whether the disturbance signal is communicated on an i^{th} time unit in the M time units is determined based on the first random seed, the first time resource, and i, and i is any integer from 1 to M.

In a possible implementation, the first measurement signal is communicated on a first time resource, the first time resource includes at least M time units, and M is an integer greater than 1.

The quantity of times of adding the disturbance signal to the first measurement signal is L, L is an integer greater than 0 and less than M, and L is determined based on the first random seed and the first time resource.

A time location, in the first measurement signal, of a j^{th} disturbance signal in the L disturbance signals is determined based on the first random seed, the first time resource, and j, and j is an integer greater than 0 and less than or equal to L.

In a possible implementation, a length of the time unit is determined based on at least one of the following:
a length of one or more symbols in the time resource;
a hopping frequency spacing; and
a frequency spacing between a plurality of frequency components.

In a possible implementation, the receiving unit 701 is further configured to:
receive fourth information, where the fourth information indicates a second random seed, and the second random seed is used to determine an initial phase of a frequency component of the first measurement signal.

In a possible implementation, when the first measurement signal is a multi-tone signal,
the second random seed is used to generate an initial phase of each frequency component of the first measurement signal; or
the second random seed is used to generate a time offset, and an initial phase of each frequency component of the first measurement signal is determined based on the time offset and a preset phase combination.

In a possible implementation, the receiving unit 701 is further configured to:
receive sixth information from the first node, where the sixth information indicates whether to add the disturbance signal to the first measurement signal, and/or indicates whether to randomize the initial phase of the first measurement signal.

For specific operations of the units in the apparatus 700 shown in FIG. 7 and beneficial effect, refer to the descriptions in the method and the possible implementations of the method in FIG. 3. Details are not described herein again.

FIG. 8 is a diagram of a possible hardware structure of an apparatus 800 according to an embodiment of this application. The apparatus 800 may be the first node in the method in the foregoing embodiments, a chip in the first node, a processing system in the first node, or the like. The apparatus 800 includes a processor 801, a storage 802, and a communication interface 803. The processor 801, the communication interface 803, and the storage 802 may be connected to each other or connected to each other through a bus 804.

For example, the storage 802 is configured to store a computer program and data of the apparatus 800. The storage 802 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Software or program code required for implementing functions of all or some units in the method shown in FIG. 3 is stored in the storage 802.

If the software or the program code required for implementing functions of some units is stored in the storage 802, in addition to invoking the program code in the storage 802 to implement some functions, the processor 801 may further cooperate with another component (for example, the communication interface 803) to jointly complete another function (for example, the function of receiving information) described in the method shown in FIG. 3.

There may be a plurality of communication interfaces 803, configured to support the apparatus 800 in performing communication, for example, receiving or sending data, a signal, or signaling.

For example, the processor 801 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 801 may be configured to read a program stored in the storage 802, to perform operations performed by the first node in the method and the possible implementations in FIG. 3. For example, the processor 801 may perform the following operations:
determining a type of a measurement signal sent and/or received by a second node, where the first node is a master node, the second node is a slave node, the second node is a measurement node or a measured node, and the measurement is ranging, angle measurement, or positioning performed on the measured node; and
sending first information to the second node through the communication interface, where the first information indicates the type of the measurement signal, and the type of the measurement signal includes a single-tone signal or a multi-tone signal.

For specific operations performed by the apparatus 800 shown in FIG. 8 and beneficial effect, refer to the descriptions in the method and the possible implementations of the method in FIG. 3. Details are not described herein again.

FIG. 9 is a diagram of a possible hardware structure of an apparatus 900 according to an embodiment of this application. The apparatus 900 may be the second node in the method in the foregoing embodiments, a chip in the second node, a processing system in the second node, or the like. The apparatus 900 includes a processor 901, a storage 902, and a communication interface 903. The processor 901, the communication interface 903, and the storage 902 may be connected to each other or connected to each other through a bus 904.

For example, the storage 902 is configured to store a computer program and data of the apparatus 900. The storage 902 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Software or program code required for implementing functions of all or some units in the method shown in FIG. 3 is stored in the storage 902.

If the software or the program code required for implementing functions of some units is stored in the storage 902, in addition to invoking the program code in the storage 902 to implement some functions, the processor 901 may further cooperate with another component (for example, the communication interface 903) to jointly complete another function (for example, the function of receiving information) described in the method shown in FIG. 3.

There may be a plurality of communication interfaces 903, configured to support the apparatus 900 in performing communication, for example, receiving or sending data, a signal, or signaling.

For example, the processor 901 may be a central processing unit, a general-purpose processor, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 901 may be configured to read a program stored in the storage 902, to perform operations performed by the second node in the method and the possible implementations in FIG. 3. For example, the processor 901 may perform the following operations:
receiving first information from a first node through the communication interface, where the first information indicates a type of a measurement signal sent and/or received by the second node, the type of the measurement signal includes a single-tone signal or a multi-tone signal, the first node is a master node, the second node is a slave node, the second node is a measurement node or a measured node, and the measurement is ranging, angle measurement, or positioning performed on the measured node; and
sending or receiving a first measurement signal through the communication interface, where the first measurement signal is used for the measurement.

For specific operations performed by the apparatus 900 shown in FIG. 9 and beneficial effect, refer to the descriptions in the method and the possible implementations of the method in FIG. 3. Details are not described herein again.

An embodiment of this application further provides a chip. The chip includes a processor, and the processor is configured to execute a computer program or computer instructions stored in a storage, so that the chip performs operations performed by the first node in FIG. 3 and the method in any one of the possible method embodiments in FIG. 3.

An embodiment of this application further provides a chip. The chip includes a processor, and the processor is configured to execute a computer program or computer instructions stored in a storage, so that the chip performs operations performed by the second node in FIG. 3 and the method in any one of the possible method embodiments in FIG. 3.

An embodiment of this application further provides a computer-readable storage medium. The computer-readable storage medium stores a computer program, and the computer program is executed by a processor to implement operations performed by the first node in FIG. 3 and the method in any one of the possible method embodiments in FIG. 3.

An embodiment of this application further provides a computer-readable storage medium. The computer-readable storage medium stores a computer program, and the computer program is executed by a processor to implement operations performed by the second node in FIG. 3 and the method in any one of the possible method embodiments in FIG. 3.

An embodiment of this application further provides a computer program product. When the computer program product is read and executed by a computer, operations performed by the first node in FIG. 3 and the method in any one of the possible method embodiments in FIG. 3 are performed.

An embodiment of this application further provides a computer program product. When the computer program product is read and executed by a computer, operations performed by the second node in FIG. 3 and the method in any one of the possible method embodiments in FIG. 3 are performed.

In conclusion, in this solution, the master node may determine the type of the measurement signal sent or received by the node, and indicate the node to use the measurement signal of the specific type, so that the node can implement ranging, angle measurement, or positioning. In addition, in this solution, the solution of disturbing the measurement signal and randomly setting the initial phase of the measurement signal is further provided, to effectively damage regularity of the measurement signal, and reduce a risk of eavesdropping on or forging the measurement signal.

It should be noted that, in this application, prefix words such as "first" and "second" are used only to distinguish between different described objects, and do not constitute any limitation on locations, a sequence, priorities, a quantity, content, or the like of the described objects. For example, if the described object is a "field", ordinal numbers before the "field" in a "first field" and a "second field" do not limit positions or a sequence of the "fields", and "first" and "second" do not limit whether "fields" modified by "first" and "second" are in a same message, and do not limit a sequence of the "first field" and the "second field". For another example, if the described object is a "level", ordinal numbers before the "level" in a "first level" and a "second level" do not limit priorities of the "levels". For another example, a quantity of described objects is not limited by modifiers, and may be one or more. A "first device" is used as an example. A quantity of "devices" may be one or more. In addition, objects modified by different modifiers may be the same or different. For example, if the described object is a "device", a "first device" and a "second device" may be a same device, devices of a same type, or devices of different types. For another example, if the described object is "information", "first information" and "second information" may be information of same content or information of different content. For example, without departing from the scope of the various examples, the first node may be referred to as a second node, and similarly, the second node may be referred to as a first node. Both the first node and the second node may be nodes, and in some cases may be separate and different nodes. In conclusion, in embodiments of this application, the modifiers used to distinguish between the described objects do not constitute any limitation on the described objects. For descriptions of the described objects, refer to descriptions of the context in the claims or embodiments. The modifiers should not constitute any unnecessary limitation.

It should be noted that, in embodiments of this application, expressions such as "at least one of a1, a2, ..., and an" are used, including a case in which any one of a1, a2, ..., and an exists alone, and also including any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

It should further be understood that sequence numbers of processes do not mean execution sequences in embodiments of this application. The execution sequences of the processes should be determined based on functions and internal logic of the processes, and should not be construed as any limitation on the implementation processes of embodiments of this application.

It should further be understood that the term "include" (also referred to as "includes", "including", "comprises", and/or "comprising") used in this specification specifies presence of the stated features, integers, steps, operations, elements, and/or components, but does not preclude presence or addition of one or more other features, integers, steps, operations, elements, components, and/or groups thereof.

It should further be understood that "one embodiment", "an embodiment", and "a possible implementation" mentioned throughout the specification mean that a specific feature, structure, or characteristic related to the embodiment or an implementation is included in at least one of embodiments of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any proper manner.

Finally, it should be noted that the foregoing embodiments are merely intended for describing the technical solutions in embodiments of this application other than limiting this application. Although this application is described in detail with reference to the foregoing embodiments, a person of ordinary skill in the art should understand that modifications may still be made to the technical solutions described in the foregoing embodiments or equivalent replacements are made to some or all technical features thereof, without departing from the scope of the technical solutions of embodiments of this application.

## Claims

1. A measurement signal processing method, wherein the method comprises:
determining, by a first node, a type of a measurement signal sent and/or received by a second node, wherein the first node is a master node, the second node is a slave node, the second node is a measurement node or a measured node, and the measurement is ranging, angle measurement, or positioning performed on the measured node; and
sending, by the first node, first information to the second node, wherein the first information indicates the type of the measurement signal, and the type of the measurement signal comprises a single-tone signal or a multi-tone signal.

2. The method according to claim 1, wherein the first node sends second information to the second node, and the second information indicates one or more of the following:
a quantity N of simultaneously communicated frequency components in the measurement signal, wherein N is an integer greater than or equal to 1;
a frequency spacing between frequency components in the measurement signal; and
a modulation scheme of the measurement signal.

3. The method according to claim 1 or 2, wherein the first node receives third information from the second node, and the third information indicates a capability of sending and/or receiving the measurement signal of the second node.

4. The method according to any one of claims 1 to 3, wherein the first node obtains a performance requirement of the measurement, and the performance requirement comprises at least one of the following: ranging precision, positioning precision, angle measurement precision, a ranging delay, a positioning delay, an angle measurement delay, a ranging range, or an angle measurement range.

5. The method according to any one of claims 1 to 4, wherein the method further comprises:
sending, by the first node, fourth information to the second node, wherein the fourth information indicates a first random seed, and the first random seed is used to determine a quantity of times of adding a disturbance signal to the measurement signal and/or a time location of the disturbance signal.

6. The method according to claim 5, wherein the disturbance signal is a phase-inverted signal of an original signal.

7. The method according to any one of claims 1 to 6, wherein the method further comprises:
sending, by the first node, fifth information to the second node, wherein the fifth information indicates a second random seed, and the second random seed is used to determine an initial phase of a frequency component of the measurement signal.

8. The method according to claim 7, wherein when the measurement signal is a multi-tone signal,
the second random seed is used to generate an initial phase of each frequency component of the measurement signal; or
the second random seed is used to generate a time offset, and an initial phase of each frequency component of the measurement signal is determined based on the time offset and a preset phase combination.

9. The method according to any one of claims 1 to 8, wherein the method further comprises:
sending, by the first node, sixth information to the second node, wherein the sixth information indicates whether to add the disturbance signal to the measurement signal, and/or indicates whether to randomize the initial phase of the measurement signal.

10. A measurement signal processing method, wherein the method comprises:
receiving, by a second node, first information from a first node, wherein the first information indicates a type of a measurement signal sent and/or received by the second node, the type of the measurement signal comprises a single-tone signal or a multi-tone signal, the first node is a master node, the second node is a slave node, the second node is a measurement node or a measured node, and the measurement is ranging, angle measurement, or positioning performed on the measured node; and
sending or receiving, by the second node, a first measurement signal, wherein the first measurement signal is used for the measurement.

11. The method according to claim 10, wherein the second node receives second information from the first node, and the second information indicates one or more of the following:
a quantity N of simultaneously communicated frequency components in the measurement signal, wherein N is an integer greater than or equal to 1;
a frequency spacing between frequency components in the measurement signal; and
a modulation scheme of the measurement signal.

12. The method according to claim 10 or 11, wherein the method further comprises:
sending, by the second node, third information to the first node, wherein the third information indicates a capability of sending and/or receiving the measurement signal of the second node.

13. The method according to any one of claims 10 to 12, wherein the method further comprises:
sending, by the second node to the first node, information indicating a performance requirement, wherein the performance requirement comprises at least one of the following: ranging precision, positioning precision, angle measurement precision, a ranging delay, a positioning delay, an angle measurement delay, a ranging range, or an angle measurement range.

14. The method according to any one of claims 10 to 13, wherein the method further comprises:
receiving, by the second node, fourth information from the first node, wherein the fourth information indicates a first random seed, and the first random seed is used to determine a quantity of times of adding a disturbance signal to the first measurement signal and/or a time location of the disturbance signal.

15. The method according to claim 14, wherein the disturbance signal is a phase-inverted signal of an original signal.

16. The method according to claim 14 or 15, wherein the first measurement signal is communicated on a first time resource, the first time resource comprises at least M time units, and M is an integer greater than 1; and
whether the disturbance signal is communicated on an i^{th} time unit in the M time units is determined based on the first random seed, the first time resource, and i, and i is any integer from 1 to M.

17. The method according to claim 14 or 15, wherein the first measurement signal is communicated on a first time resource, the first time resource comprises at least M time units, and M is an integer greater than 1;
the quantity of times of adding the disturbance signal to the first measurement signal is L, L is an integer greater than 0 and less than M, and L is determined based on the first random seed and the first time resource; and
a time location, in the first measurement signal, of a j^{th} disturbance signal in the L disturbance signals is determined based on the first random seed, the first time resource, and j, and j is an integer greater than 0 and less than or equal to L.

18. The method according to claim 16 or 17, wherein a length of the time unit is determined based on at least one of the following:
a length of one or more symbols in the time resource;
a hopping frequency spacing; and
a frequency spacing between a plurality of frequency components.

19. The method according to any one of claims 10 to 18, wherein the method comprises:
receiving, by the first node, fifth information, wherein the fifth information indicates a second random seed, and the second random seed is used to determine an initial phase of a frequency component of the first measurement signal.

20. The method according to claim 19, wherein when the first measurement signal is a multi-tone signal,
the second random seed is used to generate an initial phase of each frequency component of the first measurement signal; or
the second random seed is used to generate a time offset, and an initial phase of each frequency component of the first measurement signal is determined based on the time offset and a preset phase combination.

21. The method according to any one of claims 10 to 20, wherein the method comprises:
receiving, by the second node, sixth information from the first node, wherein the sixth information indicates whether to add the disturbance signal to the first measurement signal, and/or indicates whether to randomize the initial phase of the first measurement signal.

22. A measurement signal processing apparatus, wherein the apparatus comprises:
a determining unit, configured to determine a type of a measurement signal sent and/or received by a second node, wherein the apparatus is a master node, the second node is a slave node, the second node is a measurement node or a measured node, and the measurement is ranging, angle measurement, or positioning performed on the measured node; and
a sending unit, configured to send first information to the second node, wherein the first information indicates the type of the measurement signal, and the type of the measurement signal comprises a single-tone signal or a multi-tone signal.

23. The apparatus according to claim 22, wherein the sending unit is further configured to send second information to the second node, and the second information indicates one or more of the following:
a quantity N of simultaneously communicated frequency components in the measurement signal, wherein N is an integer greater than or equal to 1;
a frequency spacing between frequency components in the measurement signal; and
a modulation scheme of the measurement signal.

24. The apparatus according to claim 22 or 23, wherein the apparatus further comprises a receiving unit, configured to receive third information from the second node, and the third information indicates a capability of sending and/or receiving the measurement signal of the second node.

25. The apparatus according to any one of claims 22 to 24, wherein the apparatus further comprises an obtaining unit, configured to obtain a performance requirement of the measurement, and the performance requirement comprises at least one of the following: ranging precision, positioning precision, angle measurement precision, a ranging delay, a positioning delay, an angle measurement delay, a ranging range, or an angle measurement range.

26. The apparatus according to any one of claims 22 to 25, wherein the sending unit is further configured to:
send fourth information to the second node, wherein the fourth information indicates a first random seed, and the first random seed is used to determine a quantity of times of adding a disturbance signal to the measurement signal and/or a time location of the disturbance signal.

27. The apparatus according to claim 26, wherein the disturbance signal is a phase-inverted signal of an original signal.

28. The apparatus according to any one of claims 22 to 27, wherein the sending unit is further configured to:
send fifth information to the second node, wherein the fifth information indicates a second random seed, and the second random seed is used to determine an initial phase of a frequency component of the measurement signal.

29. The apparatus according to claim 28, wherein when the measurement signal is a multi-tone signal,
the second random seed is used to generate an initial phase of each frequency component of the measurement signal; or
the second random seed is used to generate a time offset, and an initial phase of each frequency component of the measurement signal is determined based on the time offset and a preset phase combination.

30. The apparatus according to any one of claims 22 to 29, wherein the sending unit is further configured to:
send sixth information to the second node, wherein the sixth information indicates whether to add the disturbance signal to the measurement signal, and/or indicates whether to randomize the initial phase of the measurement signal.

31. A measurement signal processing apparatus, wherein the apparatus comprises:
a receiving unit, configured to receive first information from a first node, wherein the first information indicates a type of a measurement signal sent and/or received by the apparatus, the type of the measurement signal comprises a single-tone signal or a multi-tone signal, the first node is a master node, the apparatus is a slave node, the apparatus is a measurement node or a measured node, and the measurement is ranging, angle measurement, or positioning performed on the measured node; and
a communication unit, configured to send or receive a first measurement signal, wherein the first measurement signal is used for the measurement.

32. The apparatus according to claim 31, wherein that the first information indicates a type of a measurement signal sent and/or received by the apparatus comprises that the first information indicates one or more of the following:
a quantity N of simultaneously communicated frequency components in the measurement signal, wherein N is an integer greater than or equal to 1;
a frequency spacing between frequency components in the measurement signal; and
a modulation scheme of the measurement signal.

33. The apparatus according to claim 31 or 32, wherein the apparatus further comprises a sending unit, configured to send third information to the first node, and the third information indicates a capability of sending and/or receiving the measurement signal of the apparatus.

34. The apparatus according to any one of claims 31 to 33, wherein the apparatus further comprises the sending unit, configured to send, to the first node, information indicating a performance requirement, and the performance requirement comprises at least one of the following: ranging precision, positioning precision, angle measurement precision, a ranging delay, a positioning delay, an angle measurement delay, a ranging range, or an angle measurement range.

35. The apparatus according to any one of claims 31 to 34, wherein the receiving unit is further configured to:
receive fourth information from the first node, wherein the fourth information indicates a first random seed, and the first random seed is used to determine a quantity of times of adding a disturbance signal to the first measurement signal and/or a time location of the disturbance signal.

36. The apparatus according to claim 35, wherein the disturbance signal is a phase-inverted signal of an original signal.

37. The apparatus according to claim 35 or 36, wherein the first measurement signal is communicated on a first time resource, the first time resource comprises at least M time units, and M is an integer greater than 1; and
whether the disturbance signal is communicated on an i^{th} time unit in the M time units is determined based on the first random seed, the first time resource, and i, and i is any integer from 1 to M.

38. The apparatus according to claim 34 or 36, wherein the first measurement signal is communicated on a first time resource, the first time resource comprises at least M time units, and M is an integer greater than 1;
the quantity of times of adding the disturbance signal to the first measurement signal is L, L is an integer greater than 0 and less than M, and L is determined based on the first random seed and the first time resource; and
a time location, in the first measurement signal, of a j^{th} disturbance signal in the L disturbance signals is determined based on the first random seed, the first time resource, and j, and j is an integer greater than 0 and less than or equal to L.

39. The apparatus according to claim 37 or 38, wherein a length of the time unit is determined based on at least one of the following:
a length of one or more symbols in the time resource;
a hopping frequency spacing; and
a frequency spacing between a plurality of frequency components.

40. The apparatus according to any one of claims 31 to 39, wherein the receiving unit is further configured to:
receive fifth information, wherein the fifth information indicates a second random seed, and the second random seed is used to determine an initial phase of a frequency component of the first measurement signal.

41. The apparatus according to claim 40, wherein when the first measurement signal is a multi-tone signal,
the second random seed is used to generate an initial phase of each frequency component of the first measurement signal; or
the second random seed is used to generate a time offset, and an initial phase of each frequency component of the first measurement signal is determined based on the time offset and a preset phase combination.

42. The apparatus according to any one of claims 31 to 41, wherein the receiving unit is further configured to:
receive sixth information from the first node, wherein the sixth information indicates whether to add the disturbance signal to the first measurement signal, and/or indicates whether to randomize the initial phase of the first measurement signal.

43. A measurement signal processing apparatus, wherein the apparatus comprises a processor and a storage, the storage is configured to store a computer program, and the processor is configured to execute the computer program stored in the storage, so that the apparatus performs the method according to any one of claims 1 to 9 or the method according to any one of claims 10 to 21.

44. A communication system, wherein the communication system comprises a first node and a second node, the first node is the measurement signal processing apparatus according to any one of claims 22 to 30, and the second node is the measurement signal processing apparatus according to any one of claims 31 to 42.

45. A computer-readable storage medium, wherein the computer-readable storage medium stores a computer program, and the computer program is executed by a processor to implement the method according to any one of claims 1 to 9; or
the computer-readable storage medium stores a computer program, and the computer program is executed by a processor to implement the method according to any one of claims 10 to 21.
